(19) Europäisches Patentamt
European Patent Office
Office européen des brevets

(11) **EP 3 531 698 A1**

(12) **EUROPEAN PATENT APPLICATION**
published in accordance with Art. 153(4) EPC

(43) Date of publication:
**28.08.2019 Bulletin 2019/35**

(51) Int Cl.:
***H04N 19/117*** *(2014.01)*

(21) Application number: **17874834.9**

(22) Date of filing: **23.08.2017**

(86) International application number:
**PCT/CN2017/098647**

(87) International publication number:
**WO 2018/095087 (31.05.2018 Gazette 2018/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.11.2016 CN 201611061582**

(71) Applicant: **Huawei Technologies Co., Ltd.**
**Longgang District**
**Shenzhen, Guangdong 518129 (CN)**

(72) Inventors:
• **MA, Xiang**
  **Shenzhen**
  **Guangdong 518129 (CN)**
• **YANG, Haitao**
  **Shenzhen**
  **Guangdong 518129 (CN)**

(74) Representative: **Körber, Martin Hans**
  **Mitscherlich PartmbB**
  **Patent- und Rechtsanwälte**
  **Sonnenstrasse 33**
  **80331 München (DE)**

(54) **DEBLOCKING FILTER METHOD AND TERMINAL**

(57) Embodiments of the present invention disclose a de-blocking filtering method and a terminal. The method includes: determining that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, and points on the polyhedron with the M faces are used to constitute the pixel area including pixels; and filtering the first filtering boundary based on a pixel in the first to-be-filtered block and a pixel in a filtering reference block in the target image, where a boundary of the filtering reference block and the first filtering boundary coincide on an edge of the polyhedron with the M faces. According to the embodiments of the present invention, a de-blocking filtering effect can be improved.

FIG. 9

**Description**

**TECHNICAL FIELD**

The present invention relates to the field of computer technologies, and in particular, to a de-blocking filtering method and a terminal.

**BACKGROUND**

Current video encoding technologies mainly include procedures such as intra prediction (English: Intra Prediction), inter-frame prediction (English: Inter Prediction), transformation (English: Transformation), quantization (English: Quantization), entropy encoding (English: Entropy encode), and de-blocking filtering (English: de-blocking filtering). Because reconstruction processes (including operations such as prediction, transformation, and quantization in which some information is lost) of blocks of an image in a video are relatively independent from each other, a blocking artifact (English: Blocking artifacts) easily appears in an image and is more obvious when a bit rate is low, seriously affecting subjective quality of the image. In addition, a reconstructed image is used as a reference frame of a subsequent encoded image, and consequently a blocking artifact further affects encoding efficiency of the subsequent image.

De-blocking filtering technologies are usually used in an encoding and decoding process to improve encoding quality. To be specific, blocks in a reconstructed image are traversed, and smooth filtering is performed on a boundary of each block that is traversed to, to reduce a blocking artifact in the boundary of the block. As panorama videos (also referred to as a virtual reality (English: virtual reality, VR for short) video) develop, de-blocking filtering technologies face new challenges.

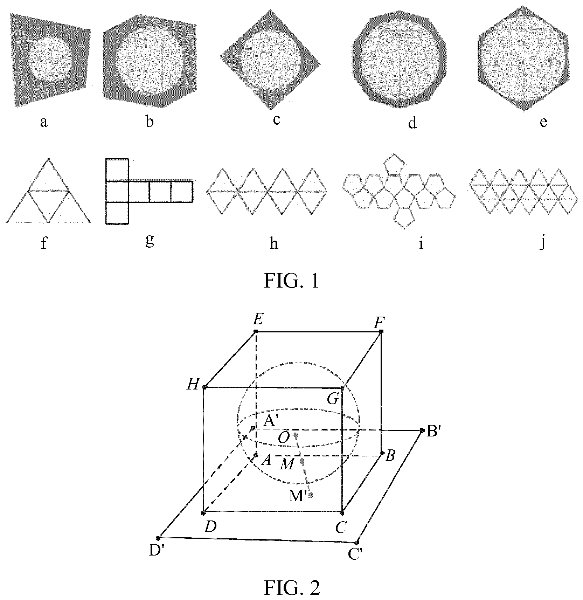

A processed image in a panorama video is approximate to a spherical panorama image. For ease of encoding, the three-dimensional panorama image usually needs to be converted into a two-dimensional plane. Currently, in a relatively common practice, the three-dimensional panorama image is converted into a longitude-latitude diagram. However, an area near to south and north poles is stretched in the longitude-latitude diagram, resulting in serious distortion and data redundancy. To avoid distortion and data redundancy, a person skilled in the art is trying to map a pixel in the panorama image to a surface of a regular polyhedron, to represent the panorama image by using several polygonal planar images with equal sizes. As shown in FIG. 1, in a part a, a regular tetrahedron surrounds the panorama image, in a part b, a regular hexahedron surrounds the panorama image, in a part c, a regular octahedron surrounds the panorama image, in a part d, a regular dodecahedron surrounds the panorama image, in a part e, a regular icosohedron surrounds the panorama image, and so on. The surface of a polyhedron is extended to obtain a two-dimensional planar image, a part f is a two-dimensional planar image obtained by extending the regular tetrahedron, a part g is a two-dimensional planar image obtained by extending the regular hexahedron, a part h is a two-dimensional planar image obtained by extending the regular octahedron, a part i is a two-dimensional planar image obtained by extending the regular dodecahedron, and a part j is a two-dimensional planar image obtained by extending the regular icosohedron.

A specific process of mapping the pixel in the panorama image to the surface of a regular polyhedron is as follows: surrounding the panorama image with the polyhedron; connecting a line between a spherical center of the panorama image and a pixel in the panorama image and elongating the line to intersect with the surface of the polyhedron, where a pixel value of an intersecting point is equal to that of the pixel; and performing the mapping operation on all pixels in the panorama image. If another pixel on the polyhedron is not mapped to a pixel value, a pixel value of the another pixel may be obtained through interpolation with reference to a pixel value of a pixel around the another pixel (It may be understood that to obtain a pixel value of a pixel on the polyhedron, a line between the pixel and the spherical center may be connected to intersect with a point in the panorama image, and then a pixel value of the point is used as that of the pixel). A mapping process of a hexahedron is used as an example. A panorama image is inscribed in a hexahedron ABCDEFGH in FIG. 2. To obtain a pixel value at a point M' on the polyhedron, a line between a spherical center O and M' is connected to intersect with a point M on a spherical surface, where a pixel value of the point M is that of the point M'. Pixel values of all pixels in a face ABCD in the plane A'B'C'D' may be obtained based on this method, pixels on the face ABCD constitute a pixel area (or referred to as a planar image), and the plane A'B'C'D' is referred to as a projection plane (projection plane) of the face ABCD. Similarly, a pixel area and a projection plane corresponding to another face of the hexahedron may be obtained.

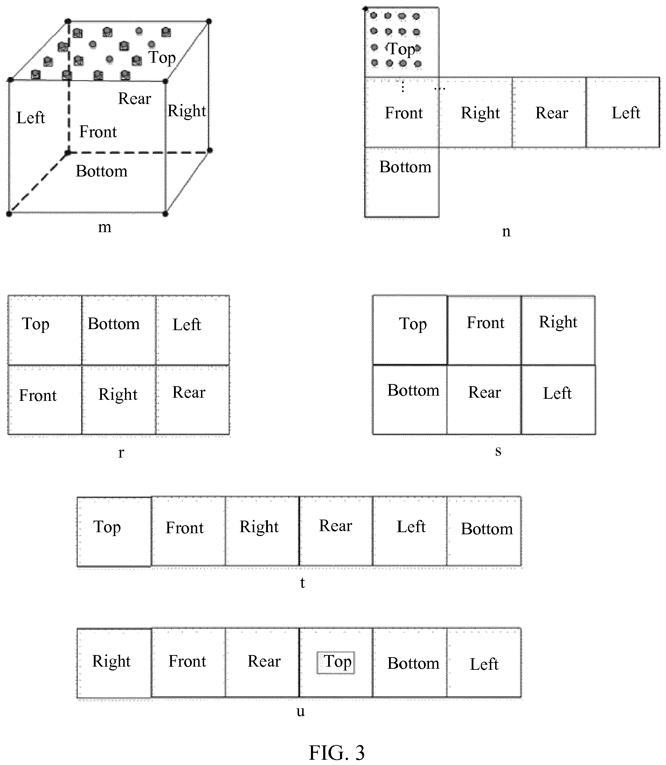

Pixel areas on faces of a hexahedron are extended and spliced to obtain a two-dimensional planar image. As shown in FIG. 3, a two-dimensional plane of the part n may be obtained by extending and splicing a hexahedron in a part m. A pixel area on the top top on the surface of the hexahedron becomes a pixel area in an upper left corner of the two-dimensional planar image, a pixel area on the bottom bottom becomes a pixel area in a lower left corner of the two-dimensional planar image, and a pixel area in the front front, a pixel area on the right right, a pixel area in the rear, and a pixel area on the left left are shown in the part n (front indicates front (or a front face), rear indicates rear (or a rear face), right indicates right, left indicates left, top indicates top (or a top part), and bottom indicates bottom (or a bottom part)). Descriptions are not provided herein one by one again. In an image encoding process, a rectangular image is usually used as an encoded object. Therefore, a part other than the two-dimensional planar image in a minimum rectangle surrounding the two-dimensional planar image may be directly filled with black, gray, white, or the like. In addition, alternatively, pixel areas may be directly spliced to obtain a rectangular two-dimensional planar image, to avoid a filling operation.

In the prior art, de-blocking filtering is performed on a two-dimensional planar image obtained by mapping a panorama image. When a filtering boundary of a block in the two-dimensional planar image is located on an intersecting line of two pixel areas, filtering is performed on the filtering boundary by using pixel values of pixels in blocks of the two pixel areas. Because a pixel area in the two-dimensional planar image may be spliced in a plurality of manners, the two pixel areas may not be really neighboring to each other in the panorama image, and it is highly possible that pixel values of pixels on two sides of the filtering boundary are greatly different, resulting in that two sides of the filtering boundary on which filtering is performed are vague.

## SUMMARY

To better understand solutions in embodiments of the present invention, the following describes some possible related technologies first.

Layout information:

A face formed by mapping a spherical panorama image to a surface of a polyhedron may be referred to as a planar image, or may be referred to as a pixel area. When planar images of the polyhedron are extended to become a two-dimensional planar image in a polyhedron format, there are many optional layout manners for the two-dimensional planar image. A layout manner may be described by using layout information, layout information of different layout manners is different, and the layout information herein may include the following information:

(1) Information about a quantity of faces of the polyhedron in a process of mapping a spherical surface to the surface of the polyhedron.
(2) Information about an arrangement manner of planar images when the surface of the polyhedron are extended to become a two-dimensional image.
(3) Information about an arrangement sequence of planar images when the surface of the polyhedron are extended to become a two-dimensional image.
(4) Rotation information about planar images when the surface of the polyhedron are extended to become a two-dimensional image.

For example, the spherical panorama image may be mapped to surfaces of different polyhedrons such as the surface of a hexahedron, the surface of an octahedron, or the surface of another polyhedron. A quantity of faces of a polyhedron that is specifically mapped to may be indicated by the information about a quantity of faces. After a polyhedron is determined based on the information about a quantity of faces, when the surface of the polyhedron is extended to become a two-dimensional planar image, the two-dimensional planar image further has a plurality of arrangement manners. A hexahedron is used as an example. As shown in FIG. 3, a part n is a 4x3 type, a part r and a part s are a 3x2 type, and a part t and a part u are a 6x1 type. Examples of other types are no longer listed one by one. The information about an arrangement manner herein is used to indicate an arrangement manner used. In addition, although arrangement manners are the same, an arrangement sequence of faces may be different. As shown in FIG. 3, arrangement sequences of the part t and the part u are different, and the information about an arrangement sequence may indicate an arrangement sequence of faces. In addition, an operation such as rotation may further be performed on each face, for example, front of the part t has angle rotation compared with that of the part u in FIG. 3. The rotation information may indicate a rotation status of each face. The layout information may further include other information, and a layout manner of each planar image of the two-dimensional planar image may be obtained from the layout information. It may be understood that after the layout information and the layout manner of faces in the two-dimensional planar image are learned, a connection relationship between the faces on the polyhedron in the planar image may be deduced.

Several important procedures during de-blocking filtering:

1. A filtering boundary is determined, specifically including that a block (a block that is currently traversed to may be referred to as a to-be-filtered block) is traversed in an image and a filtering boundary is determined in the block according to a preset rule. Different encoders may select a filtering boundary by using different methods. For example, in H.264, a boundary of a 4x4 block is used as a filtering boundary. In H.265, a boundary of each 8x8 subblock in a coding unit (CU) is traversed, if the boundary is a divided boundary of a transformation unit of the coding unit, an upper boundary and a left boundary in the 8x8 subblock are determined as a transformation filtering boundary; if the boundary is a divided boundary of a prediction unit of the coding unit, the upper boundary and the left boundary of the 8x8 subblock are set as a prediction filtering boundary, and if the boundary is a transformation filtering boundary or a prediction filtering boundary, the boundary is determined as a filtering boundary. In addition, the "boundary" described in the embodiments of the present invention may also be referred to as an edge.

2. A boundary filtering strength (English: Boundary filtering strength, BS for short) of a filtering boundary is calculated, and the boundary filtering strength is usually calculated based on coding information of blocks on two sides of a boundary. For example, a quantization parameter, a coding mode, a quantization residual coefficient, and a motion parameter all belong to the coding information. Because of blocking artifacts of different boundary filtering strength, filters with different strength are properly selected.

For example, in H.265, a boundary of each 8x8 subblock is traversed, and if the boundary is not a filtering boundary, boundary filtering strength BS is set to 0. Otherwise, if the boundary is a horizontal filtering boundary, P is an upper subblock of the horizontal boundary and Q is a lower subblock of the horizontal boundary. If the boundary is a vertical filtering boundary, P is a left subblock of the vertical boundary and Q is a right subblock of the vertical boundary. In conclusion, during filtering of the filtering boundary, blocks on two sides of the filtering boundary may be determined for the filtering boundary to facilitate the operation. Boundary filtering strength of the filtering boundary that is determined based on information of the subblock P and information of the subblock Q is as follows:

If at least one coding unit of P or Q uses an intra prediction mode, BS is set to 2.

Otherwise, if the filtering boundary is a divided boundary of a transformation unit, and a transformation unit of P or Q has at least one non-zero coefficient (In a standard, a coded block flag (English: Coded block flag, CBF for short) is usually used to indicate whether a coding unit has a non-zero coefficient. If there is a non-zero coefficient, the CBF is 1; otherwise, the CBF is 0. Therefore, the condition may also be described as that the CBF is equal to 1), BS is set to 1.

Otherwise, assuming that a motion vector difference threshold T is four times 1/4 brightness sampling precision, if one of the following conditions is true, BS is set to 1.

Condition 1: Prediction units of P and Q have different quantities of reference images or motion vectors. The prediction unit of P has one motion vector and the prediction unit of Q has one motion vector. A motion vector difference of a horizontal component or a vertical component between the two motion vectors is greater than or equal to T.

Condition 2: A prediction unit of P has two motion vectors and reference images are different, and a prediction unit of Q has two motion vectors and reference images are different. A motion vector difference of a horizontal component or a vertical component between the two motion vectors using a same prediction image is greater than or equal to T.

Condition 3: A prediction unit of P has two motion vectors and reference images are the same, a prediction unit of Q has two motion vectors and reference images are the same, and the following conditions a and b are both true:

Condition a: A horizontal component difference or a vertical component difference between two motion vectors in list 0 is greater than or equal to T, or a horizontal component difference or a vertical component difference between two motion vectors in list 1 is greater than or equal to T.

Condition b: A horizontal component difference or a vertical component difference between a motion vector in a list 0 of the prediction unit of P and a motion vector in a list 1 of the prediction unit of Q is greater than or equal to T, or a horizontal component difference or a vertical component difference between a motion vector in a list 1 of the prediction unit of P and a motion vector in a list 0 of the prediction unit of Q is greater than or equal to T.

Otherwise, BS is set to 0.

3. Filtering decision is performed. The filtering decision is used to determine whether de-blocking filtering is performed on a filtering boundary, and if filtering is performed, whether strong filtering or weak filtering is performed, and the like. The filtering boundary may have a real boundary. To be specific, pixel values on two sides of the filtering boundary in an original image shot in the beginning are greatly different. To prevent filtering the real boundary, pixel values of pixels on two sides of the boundary need to be analyzed, and whether to perform filtering and what filtering strength is used are determined based on an analysis result. Boundary filtering strength BS needs to be used in an analysis process.

For example, in H.265, if BS is 0, filtering is not performed. Otherwise, boundary filtering strength BS of the filtering boundary in each 8x8 subblock, an offset slice_beta_Offset_div2, slice_tc_Offset_div2 transferred in a bitstream, and quantization parameters $Qp_Q$ and $Qp_P$ of a block of a neighboring pixel in the filtering boundary are substituted into the following formulas:

$$\mathrm{qP}_L = ((Qp_Q + Qp_P + 1) \gg 1) \qquad\qquad 1\text{-}1;$$

$$Q_1 = \text{Clip3}(0,51, qP_L + (\text{slice\_beta\_Offset\_div2} \ll 1)) \qquad \text{1-2;}$$

and

$$Q_2 = \text{Clip3}(0,53, qP_L + 2*(BS-1) + (\text{slice\_tc\_Offset\_div2} \ll 1)) \qquad \text{1-3,}$$

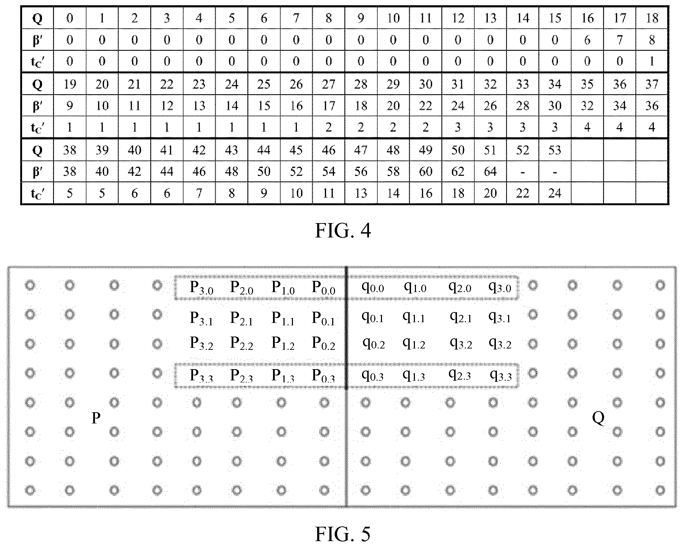

where
$qP_L$ is obtained by using the formula 1-1, and $qP_L$ is substituted into the formulas 1-2 and 1-3 to obtain $Q_1$ and $Q_2$, where $Q_1$ and $Q_2$ both are values of Q. A table shown in FIG. 4 is queried based on $Q_1$ to obtain β', and the table shown in FIG. 4 is queried based on $Q_2$ to obtain $t_c$, where Q1 and Q2 both are values of Q in the table shown in FIG. 4. Finally, values of β' and $t_c$' are substituted into the following formulas to obtain values of β and $t_c$;

$$ß = ß' * (1 \ll (\text{BitDepth} - 8)) \qquad \text{1-4;}$$

and

$$t_C = t_C' * (1 \ll (\text{BitDepth} - 8)) \qquad \text{1-5.}$$

After $t_c$ and β are calculated, whether strong filtering, weak filtering, or no filtering is performed on the filtering boundary is determined based on $t_c$, β, and a difference between pixel values on two sides of the filtering boundary. FIG. 5 is used as an example, and it is assumed that blocks on the two sides of the filtering boundary are a block P and a block Q. The block P and the block Q have N rows of pixels in total, and a straight line of each row of pixels is perpendicular to the filtering boundary. j pixels (j is an even number) need to be determined in an X$^{th}$ row of pixels of the N rows of pixels during filtering. Half of the j pixels are from the block P and half of the j pixels are from the block Q. The j pixels are sequentially arranged and a distance between any two neighboring pixels of the j pixels is equal to a minimum pixel distance, where the minimum pixel distance herein is a distance between two nearest pixels in the block P and the block Q.

It is assumed that the block P and the block Q are on the two sides of the filtering boundary, and straight lines of four rows of pixels are perpendicular to the filtering boundary. Four pixels that are in the first row of the block P and that are close to the filtering boundary are sequentially $P_{0,0}$, $P_{1,0}$, $P_{2,0}$, and $P_{3,0}$; four pixels that are in the second row of the block P and that are close to the filtering boundary are sequentially $P_{0,1}$, $P_{1,1}$, $P_{2,1}$, and $P_{3,1}$; four pixels that are in an X$^{th}$ row of the block P and that are close to the filtering boundary are sequentially $P_{0,0}$, $P_{1,0}$, $P_{2,0}$, and $P_{3,0}$; and four pixels that are in the fourth row of the block P and that are close to the filtering boundary are sequentially $P_{0,3}$, $P_{1,3}$, $P_{2,3}$, and $P_{3,3}$. A pixel value of the pixel $P_{0,0}$ may be indicated as $p_{0,0}$, a pixel value of the pixel $P_{1,0}$ may be indicated as $p_{1,0}$, and a pixel value of another pixel in the block P is deduced by analogy. Four pixels that are in the first row of the block Q and that are close to the filtering boundary are sequentially $Q_{0,0}$, $Q_{1,0}$, $Q_{2,0}$, and $Q_{3,0}$; four pixels that are in the second row of the block Q and that are close to the filtering boundary are sequentially $Q_{0,1}$, $Q_{1,1}$, $Q_{2,1}$, and $Q_{3,1}$; four pixels that are in the third row of the block Q and that are close to the filtering boundary are sequentially $Q_{0,2}$, $Q_{1,2}$, $Q_{2,2}$, and $Q_{3,2}$; and four pixels that are in the fourth row of the block Q and that are close to the filtering boundary are sequentially $Q_{0,3}$, $Q_{1,3}$, $Q_{2,3}$, and $Q_{3,3}$. A pixel value of the pixel $Q_{0,0}$ may be indicated as $q_{0,0}$, a pixel value of the pixel $Q_{1,0}$ may be indicated as $q_{1,0}$, and a pixel value of another pixel in the block Q is deduced by analogy.

Whether strong filtering, weak filtering, or no filtering is performed may be determined based on formulas 1-6, 1-7, 1-8, and 1-9. If a relationship in formula 1-6 holds true, filtering is performed; otherwise, no filtering is performed. Under a precondition that formula 1-6 holds true, if formula 1-7, 1-8, and 1-9 all hold true, strong filtering (these three formulas all hold true when i is 0 or 3) is performed; otherwise, weak filtering is performed.

$$||p|2,0) - 2p1,0 + p0,0 + ||p2,3 - 2p1,3 + p0,3 + ||q2,0 - 2q1,0 + q0,0 +$$
$$||q|2,3) - 2q1,3 + q0,3 < \beta \qquad \text{1-6;}$$

$$||p|2,i) - 2p1,i + p0,i + ||q2,i - 2q1,i + q0,i < \beta/8 \qquad \text{1-7;}$$

$$||p|3,i) - p0,i + ||q0,i - q3,i < \beta/8 \qquad 1\text{-}8;$$

and

$$||p|0,i) - q0,i < 2.5tc \qquad 1\text{-}9.$$

4. A filtering operation is performed. When it is determined, based on filtering decision, that the filtering boundary does not need to be filtered, the filtering boundary is not filtered. When it is determined that strong filtering needs to be performed, strong filtering is performed. When it is determined that weak filtering needs to be performed, weak filtering is performed. For example, in H.265, if strong filtering is performed, eight pixels in each row perpendicular to the filtering boundary are depended on, and there are four pixels on each of two sides of the filtering boundary. If weak filtering is performed, six pixels in each row perpendicular to the filtering boundary are depended on, and there are three pixels on each of the two sides of the filtering boundary. Similarly, FIG. 5 is used as an example. Pixel values of the j pixels need to be used to calculate j-2 new pixel values in a filtering process to replace pixel values of the j-2 pixels, where j is an even number greater than 2. Specific operations are as follows.

Pixel values $p_{0,0}$, $p_{1,0}$, $p_{2,0}$, $p_{3,0}$, $q_{0,0}$, $q_{1,0}$, $q_{2,0}$, and $q_{3,0}$ are used to calculate new pixel values $p'_{0,0}$, $p'_{1,0}$, $p'_{2,0}$, $q'_{0,0}$, $q'_{1,0}$, and $q'_{2,0}$. Then, $p'_{0,0}$ replaces $p_{0,0}$ to serve as a pixel value of the pixel $P_{0,0}$, $p'_{1,0}$ replaces $p_{1,0}$ to serve as a pixel value of the pixel $P_{1,0}$, $p'_{2,0}$ replaces $p_{2,0}$ to serve as a pixel value of the pixel $P_{2,0}$; $q'_{0,0}$ replaces $q_{0,0}$ to serve as a pixel value of the pixel $P_{0,0}$, $q'_{1,0}$ replaces $q_{1,0}$ to serve as a pixel value of the pixel $P_{1,0}$, and $q'_{2,0}$ replaces $q_{2,0}$ to serve as a pixel value of the pixel $P_{2,0}$, to complete filtering of the first row of pixels of four rows of pixels perpendicular to the filtering boundary. The following uses an example to describe a manner of calculating $p'_{0,0}$, $p'_{1,0}$, $p'_{2,0}$, $q'_{0,0}$, $q'_{1,0}$, and $q'_{2,0}$.

$$p'_{0,0} = \text{Clip3}(p_{0,0}-2*t_C, p_{0,0}+2*t_C, (p_{2,0}+2*p_{1,0}+2*p_{0,0}+2*q_{0,0}+q_{1,0}+4)>>3);$$

$$p'_{1,0} = \text{Clip3}(p_{1,0}-2*t_C, p_{1,0}+2*t_C, (p_{2,0}+p_{1,0}+p_{0,0}+q_{0,0}+2)>>2);$$

$$p'_{2,0} = \text{Clip3}(p_{2,0}-2*t_C, p_{2,0}+2*t_C, (2*p_{3,0}+3*p_{2,0}+p_{1,0}+p_{0,0}+q_{0,0}+4)>>3);$$

$$q'_{0,0} = \text{Clip3}(q_{0,0}-2*t_C, q_{0,0}+2*t_C, (p_{1,0}+2*p_{0,0}+2*q_{0,0}+2*q_{1,0}+q_{2,0}+4)>>3);$$

$$q'_{1,0} = \text{Clip3}(q_{1,0}-2*t_C, q_{1,0}+2*t_C, (p_{0,0}+q_{0,0}+q_{1,0}+q_{2,0}+2)>>2);$$

and

$$q'_{2,0} = \text{Clip3}(q_{2,0}-2*t_C, q_{2,0}+2*t_C, (p_{0,0}+q_{0,0}+q_{1,0}+3*q_{2,0}+2*q_{3,0}+4)>>3).$$

It should be noted that for a filtering manner of pixels in another column in the four rows, refer to the filtering manner of the first row of pixels, and details are not described herein again. In addition, a de-blocking filtering process may exist in a loop or may exist out of a loop. Out of a loop means that a filtered image is only used for display and is not used for reference or prediction for a subsequent encoded image. In a loop means that a filtered image is used for reference or prediction for a subsequent encoded image and may further be used for display.

The embodiments of the present invention provide a de-blocking filtering method and a terminal, to improve a de-blocking filtering effect. Based on the principle of the "several important procedures during de-blocking filtering", some procedures are improved, and improvements are described as follows.

According to a first aspect, an embodiment of the present invention provides a de-blocking filtering method. The method includes: determining that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4; and filtering the first filtering boundary based on a pixel in the first to-be-filtered block and a pixel in a filtering reference block in the target image, where a boundary of the filtering reference block and the first filtering boundary coincide on an edge of the polyhedron with the M faces.

In the foregoing steps, when filtering the first to-be-filtered block in the two-dimensional planar image obtained by splicing the M pixel areas formed by mapping the pixels of the spherical panorama image to the polyhedron with the M faces, the terminal performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

With reference to the first aspect, in a first possible implementation of the first aspect, after the determining that a first filtering boundary of a first to-be-filtered block in a target image belongs to a boundary of a pixel area in the target image, before the filtering the first filtering boundary based on a pixel in the first to-be-filtered block and a pixel in a filtering reference block in the target image, the method further includes: determining the filtering reference block of the first to-be-filtered block in the target image based on preconfigured layout information, where the layout information indicates a connection relationship of the M pixel areas in the polyhedron with the M faces.

With reference to the first aspect or the first possible implementation of the first aspect, in a second possible implementation of the first aspect, the determining that a first filtering boundary of a first to-be-filtered block in a target image belongs to a boundary of a pixel area in the target image includes: determining, based on prestored coordinates of a point on the boundary of the pixel area in the target image and prestored coordinates of a point on the first filtering boundary of the first to-be-filtered block, that the first filtering boundary belongs to the boundary of the pixel area.

With reference to the first aspect, the first possible implementation of the first aspect, or the second possible implementation of the first aspect, in a third possible implementation of the first aspect, the filtering the first filtering boundary based on a pixel in the first to-be-filtered block and a pixel in a filtering reference block in the target image includes: filtering the first filtering boundary based on pixels on two sides of the first filtering boundary on the polyhedron with the M faces.

With reference to the first aspect, the first possible implementation of the first aspect, the second possible implementation of the first aspect, or the third possible implementation of the first aspect, in a fourth possible implementation of the first aspect, the method further includes: determining that a second filtering boundary of a second to-be-filtered block does not belong to the boundary of the pixel area in the target image; and filtering the second filtering boundary based on pixels on two sides of the second filtering boundary in the target image.

With reference to the first aspect, the first possible implementation of the first aspect, the second possible implementation of the first aspect, the third possible implementation of the first aspect, or the fourth possible implementation of the first aspect, in a fifth possible implementation of the first aspect, after the filtering the first filtering boundary based on a pixel in the first to-be-filtered block and a pixel in a filtering reference block in the target image, the method further includes: generating a reference identifier, where the reference identifier is used to instruct to no longer filter, when the filtering reference block is traversed to in a filtering process, a boundary that is of the filtering reference block and that is close to the first to-be-filtered block.

Technical effects of this embodiment are as follows: a filtering boundary that is in the filtering reference block and that is close to the filtering block actually coincides with the filtering boundary. To be specific, when the filtering boundary is filtered, new pixel values are already calculated to replace pixel values of corresponding pixels in the to-be-filtered block and the filtering reference block. Therefore, when the filtering reference block is traversed to, the filtering boundary that is in the filtering reference block and that is close to the to-be-filtered block does not need to be filtered, thereby avoiding repeated calculation.

According to a second aspect, an embodiment of the present invention provides a de-blocking filtering method. The method includes: determining that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4; and filtering the first filtering boundary by using a plurality of target pixels in the first to-be-filtered block and a plurality of reference pixels, where the first to-be-filtered block is within a first pixel area and the reference pixel is within a second pixel area, the first pixel area and the second pixel area are connected to each other on the polyhedron with the M faces, a plurality of intersecting points of an extended line of a line connecting the spherical center and the plurality of reference pixels and a plane in which a pixel area to which the first to-be-filtered block belongs is located are symmetrical to the plurality of target pixels by using the first filtering boundary as an axis of symmetry, and in the polyhedron with the M faces, the first filtering boundary is on an edge connecting the first pixel area to the second pixel area.

In execution of the foregoing operations, when filtering the first to-be-filtered block in the two-dimensional planar image obtained by splicing the M pixel areas formed by mapping the pixels of the spherical panorama image to the polyhedron with the M faces, the terminal performs filtering by using pixel values of pixels in a pixel area on another side of a pixel boundary in which the first filtering boundary of the first to-be-filtered block is located. Lines connecting the pixels and pixels to be used in the first to-be-filtered block in the panorama image basically constitute smooth arc lines. Therefore, deformation between content of the first to-be-filtered block and content in the pixel area on the another side is relatively small, and a de-blocking filtering effect is desirable.

With reference to the second aspect, in a first possible implementation of the second aspect, the method further includes: determining that a second filtering boundary of a second to-be-filtered block does not belong to the boundary of the pixel area in the target image; and filtering the second filtering boundary based on pixels on two sides of the second filtering boundary in the target image.

With reference to the second aspect or the first possible implementation of the second aspect, in a second possible implementation of the second aspect, boundary filtering strength BS with reference to which the first filtering boundary is filtered is calculated based on encoding information of the first to-be-filtered block and encoding information of the filtering reference block, and a boundary of the filtering reference block and the first filtering boundary coincide on an edge of the polyhedron with the M faces.

With reference to the second aspect, the first possible implementation of the second aspect, or the second possible implementation of the second aspect, in a third possible implementation of the second aspect, pixel values used in a filtering decision with reference to which the first filtering boundary is filtered are pixel values of the plurality of target pixels and pixel values of the plurality of reference pixels, encoding information used in the filtering policy is the encoding information of the first to-be-filtered block and the encoding information of the filtering reference block, and a boundary of the filtering reference block and the first filtering boundary coincide on an edge of the polyhedron with the M faces.

With reference to the second possible implementation of the second aspect or the third possible implementation of the second aspect, in a fourth possible implementation of the second aspect, the encoding information includes at least one of a quantization parameter, an encoding mode, a quantization residual coefficient, and a motion parameter.

With reference to the second aspect, the first possible implementation of the second aspect, the second possible implementation of the second aspect, the third possible implementation of the second aspect, or the fourth possible implementation of the second aspect, in a fifth possible implementation of the second aspect, the plurality of reference pixels include at least one special pixel, and a pixel value of the special pixel is calculated through interpolation by using a pixel value of a pixel around the special pixel.

Technical effects of this embodiment are as follows: A corresponding point satisfying the foregoing geometrical relationship may coincide with an integer pixel or may coincide with a fraction pixel. If the corresponding point coincides with a fraction pixel, the fraction pixel generally has no pixel value. Therefore, a pixel value of the corresponding point needs to be calculated through interpolation by using an integer pixel around the corresponding point, thereby improving accuracy of the pixel value.

According to a third aspect, an embodiment of the present invention provides a terminal. The terminal includes a first determining unit and a filtering unit. The first determining unit is configured to determine that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4. The filtering unit is configured to filter the first filtering boundary based on a pixel in the first to-be-filtered block and a pixel in a filtering reference block in the target image, where a boundary of the filtering reference block and the first filtering boundary coincide on an edge of the polyhedron with the M faces.

In execution of the foregoing units, when filtering the first to-be-filtered block in the two-dimensional planar image obtained by splicing the M pixel areas formed by mapping the pixels of the spherical panorama image to the polyhedron with the M faces, the terminal performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

With reference to the third aspect, in a first possible implementation of the third aspect, the terminal further includes a second determining unit. The second determining unit is configured to: after the first determining unit determines that a first filtering boundary of a first to-be-filtered block in a target image belongs to a boundary of a pixel area in the target image, before the filtering unit filters the first filtering boundary based on a pixel in the first to-be-filtered block and a pixel in a filtering reference block in the target image, determine the filtering reference block of the first to-be-filtered block in the target image based on preconfigured layout information, where the layout information indicates a connection relationship of the M pixel areas in the polyhedron with the M faces.

With reference to the third aspect or the first possible implementation of the third aspect, in a second possible implementation of the third aspect, the first determining unit is specifically configured to determine, based on prestored coordinates of a point on the boundary of the pixel area in the target image and prestored coordinates of a point on the first filtering boundary of the first to-be-filtered block, that the first filtering boundary belongs to the boundary of the pixel area.

With reference to the third aspect, the first possible implementation of the third aspect, or the second possible implementation of the third aspect, in a third possible implementation of the third aspect, the filtering unit is specifically configured to filter the first filtering boundary based on pixels on two sides of the first filtering boundary on the polyhedron with the M faces.

With reference to the third aspect, the first possible implementation of the third aspect, the second possible implementation of the third aspect, or the third possible implementation of the third aspect, in a fourth possible implementation of the third aspect, the first determining unit is further configured to determine that a second filtering boundary of a second to-be-filtered block does not belong to the boundary of the pixel area in the target image; and the filtering unit is further configured to filter the second filtering boundary based on pixels on two sides of the second filtering boundary in the target image.

With reference to the third aspect, the first possible implementation of the third aspect, the second possible implementation of the third aspect, the third possible implementation of the third aspect, or the fourth possible implementation of the third aspect, in a fifth possible implementation of the third aspect, the terminal further includes a generation unit. The generation unit is configured to: after the filtering unit filters the first filtering boundary based on the pixel in the first to-be-filtered block and the pixel in the filtering reference block in the target image, generate a reference identifier, where the reference identifier is used to instruct to no longer filter, when the filtering reference block is traversed to in a filtering process, a boundary that is of the filtering reference block and that is close to the first to-be-filtered block.

Technical effects of this embodiment are as follows: a filtering boundary that is in the filtering reference block and that is close to the filtering block actually coincides with the filtering boundary. To be specific, when the filtering boundary is filtered, new pixel values are already calculated to replace pixel values of corresponding pixels in the to-be-filtered block and the filtering reference block. Therefore, when the filtering reference block is traversed to, the filtering boundary that is in the filtering reference block and that is close to the to-be-filtered block does not need to be filtered, thereby avoiding repeated calculation.

According to a fourth aspect, an embodiment of the present invention provides a terminal. The terminal includes a first determining unit and a filtering unit. The first determining unit is configured to determine that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4. The filtering unit is configured to filter the first filtering boundary by using a plurality of target pixels in the first to-be-filtered block and a plurality of reference pixels, where the first to-be-filtered block is within a first pixel area and the reference pixel is within a second pixel area, the first pixel area and the second pixel area are connected to each other on the polyhedron with the M faces, a plurality of intersecting points of an extended line of a line connecting the spherical center and the plurality of reference pixels and a plane in which a pixel area to which the first to-be-filtered block belongs is located are symmetrical to the plurality of target pixels by using the first filtering boundary as an axis of symmetry, and in the polyhedron with the M faces, the first filtering boundary is on an edge connecting the first pixel area to the second pixel area.

In execution of the foregoing units, when filtering the first to-be-filtered block in the two-dimensional planar image obtained by splicing the M pixel areas formed by mapping the pixels of the spherical panorama image to the polyhedron with the M faces, the terminal performs filtering by using pixel values of pixels in a pixel area on another side of a pixel boundary in which the first filtering boundary of the first to-be-filtered block is located. Lines connecting the pixels and pixels to be used in the first to-be-filtered block in the panorama image basically constitute smooth arc lines. Therefore, deformation between content of the first to-be-filtered block and content in the pixel area on the another side is relatively small, and a de-blocking filtering effect is desirable.

With reference to the fourth aspect, in a first possible implementation of the fourth aspect, the first determining unit is further configured to determine that a second filtering boundary of a second to-be-filtered block does not belong to the boundary of the pixel area in the target image; and the filtering unit is further configured to filter the second filtering boundary based on pixels on two sides of the second filtering boundary in the target image.

With reference to the fourth aspect or the first possible implementation of the fourth aspect, in a second possible implementation of the fourth aspect, boundary filtering strength BS with reference to which the first filtering boundary is filtered is calculated based on encoding information of the first to-be-filtered block and encoding information of the filtering reference block, and a boundary of the filtering reference block and the first filtering boundary coincide on an edge of the polyhedron with the M faces.

With reference to the fourth aspect, the first possible implementation of the fourth aspect, or the second possible implementation of the fourth aspect, in a third possible implementation of the fourth aspect, pixel values used in a filtering decision with reference to which the first filtering boundary is filtered are pixel values of the plurality of target pixels and pixel values of the plurality of reference pixels, encoding information used in the filtering policy is the encoding information of the first to-be-filtered block and the encoding information of the filtering reference block, and a boundary of the filtering reference block and the first filtering boundary coincide on an edge of the polyhedron with the M faces.

With reference to the second possible implementation of the fourth aspect or the third possible implementation of the fourth aspect, in a fourth possible implementation of the fourth aspect, the encoding information includes at least one of a quantization parameter, an encoding mode, a quantization residual coefficient, and a motion parameter.

With reference to the fourth aspect, the first possible implementation of the fourth aspect, the second possible implementation of the fourth aspect, the third possible implementation of the fourth aspect, or the fourth possible implementation of the fourth aspect, in a fifth possible implementation of the fourth aspect, the plurality of reference pixels include at least one special pixel, and a pixel value of the special pixel is calculated through interpolation by using a pixel value of a pixel around the special pixel.

Technical effects of this embodiment are as follows: A corresponding point satisfying the foregoing geometrical relationship may coincide with an integer pixel or may coincide with a fraction pixel. If the corresponding point coincides with a fraction pixel, the fraction pixel generally has no pixel value. Therefore, a pixel value of the corresponding point needs to be calculated through interpolation by using an integer pixel around the corresponding point, thereby improving accuracy of the pixel value.

According to a fifth aspect, an embodiment of the present invention provides a terminal. The terminal includes a processor and a memory. The memory is configured to store data and a program, and the processor invokes the program in the memory to perform the following operations: determining that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4; and filtering the first filtering boundary based on a pixel in the first to-be-filtered block and a pixel in a filtering reference block in the target image, where a boundary of the filtering reference block and the first filtering boundary coincide on an edge of the polyhedron with the M faces.

In the foregoing steps, when filtering the first to-be-filtered block in the two-dimensional planar image obtained by splicing the M pixel areas formed by mapping the pixels of the spherical panorama image to the polyhedron with the M faces, the terminal performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

With reference to the fifth aspect, in a first possible implementation of the fifth aspect, after the determining, by the processor, that a first filtering boundary of a first to-be-filtered block in a target image belongs to a boundary of a pixel area in the target image, before the filtering, by the processor, the first filtering boundary based on a pixel in the first to-be-filtered block and a pixel in a filtering reference block in the target image, the processor is further configured to determine the filtering reference block of the first to-be-filtered block in the target image based on preconfigured layout information, where the layout information indicates a connection relationship of the M pixel areas in the polyhedron with the M faces.

With reference to the fifth aspect or the first possible implementation of the fifth aspect, in a second possible implementation of the fifth aspect, the determining, by the processor, that a first filtering boundary of a first to-be-filtered block in a target image belongs to a boundary of a pixel area in the target image is specifically: determining, based on prestored coordinates of a point on the boundary of the pixel area in the target image and prestored coordinates of a point on the first filtering boundary of the first to-be-filtered block, that the first filtering boundary belongs to the boundary of the pixel area.

With reference to the fifth aspect, the first possible implementation of the fifth aspect, or the second possible implementation of the fifth aspect, in a third possible implementation of the fifth aspect, the filtering, by the processor, the first filtering boundary based on a pixel in the first to-be-filtered block and a pixel in a filtering reference block in the target image is specifically: filtering the first filtering boundary based on pixels on two sides of the first filtering boundary on the polyhedron with the M faces.

With reference to the fifth aspect, the first possible implementation of the fifth aspect, the second possible implementation of the fifth aspect, or the third possible implementation of the fifth aspect, in a fourth possible implementation of the fifth aspect, the processor is further configured to: determine that a second filtering boundary of a second to-be-filtered block does not belong to the boundary of the pixel area in the target image; and filter the second filtering boundary based on pixels on two sides of the second filtering boundary in the target image.

With reference to the fifth aspect, the first possible implementation of the fifth aspect, the second possible implementation of the fifth aspect, the third possible implementation of the fifth aspect, or the fourth possible implementation of the fifth aspect, in a fifth possible implementation of the fifth aspect, after filtering the first filtering boundary based on the pixel in the first to-be-filtered block and the pixel in the filtering reference block in the target image, the processor is further configured to: generate a reference identifier, where the reference identifier is used to instruct to no longer filter, when the filtering reference block is traversed to in a filtering process, a boundary that is of the filtering reference block and that is close to the first to-be-filtered block.

Technical effects of this embodiment are as follows: a filtering boundary that is in the filtering reference block and that is close to the filtering block actually coincides with the filtering boundary. To be specific, when the filtering boundary is filtered, new pixel values are already calculated to replace pixel values of corresponding pixels in the to-be-filtered block and the filtering reference block. Therefore, when the filtering reference block is traversed to, the filtering boundary that is in the filtering reference block and that is close to the to-be-filtered block does not need to be filtered, thereby avoiding repeated calculation.

According to a sixth aspect, an embodiment of the present invention provides a terminal. The terminal includes a processor and a memory. The memory is configured to store data and a program, and the processor invokes the program in the memory to perform the following operations: determining that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4; and filtering the first filtering boundary by using a plurality of target pixels in the first to-be-filtered block and a plurality of reference pixels, where the first to-be-filtered block is within a first pixel area and the reference pixel is within a second pixel area, the first pixel area and the second pixel area are connected to each other on the polyhedron with the M faces, a plurality of intersecting points of an extended line of a line connecting the spherical center and the plurality of reference pixels and a plane in which a pixel area to which the first to-be-filtered block belongs is located are symmetrical to the plurality of target pixels by using the first filtering boundary as an axis of symmetry, and in the polyhedron with the M faces, the first filtering boundary is on an edge connecting the first pixel area to the second pixel area.

In execution of the foregoing operations, when filtering the first to-be-filtered block in the two-dimensional planar image obtained by splicing the M pixel areas formed by mapping the pixels of the spherical panorama image to the polyhedron with the M faces, the terminal performs filtering by using pixel values of pixels in a pixel area on another side of a pixel boundary in which the first filtering boundary of the first to-be-filtered block is located. Lines connecting the pixels and pixels to be used in the first to-be-filtered block in the panorama image basically constitute smooth arc lines. Therefore, deformation between content of the first to-be-filtered block and content in the pixel area on the another side is relatively small, and a de-blocking filtering effect is desirable.

With reference to the sixth aspect, in a first possible implementation of the sixth aspect, the processor is further configured to determine that a second filtering boundary of a second to-be-filtered block does not belong to the boundary of the pixel area in the target image; and filtering the second filtering boundary based on pixels on two sides of the second filtering boundary in the target image.

With reference to the sixth aspect or the first possible implementation of the sixth aspect, in a second possible implementation of the sixth aspect, boundary filtering strength BS with reference to which the first filtering boundary is filtered is calculated based on encoding information of the first to-be-filtered block and encoding information of the filtering reference block, and a boundary of the filtering reference block and the first filtering boundary coincide on an edge of the polyhedron with the M faces.

With reference to the sixth aspect, the first possible implementation of the sixth aspect, or the second possible implementation of the sixth aspect, in a third possible implementation of the sixth aspect, pixel values used in a filtering decision with reference to which the first filtering boundary is filtered are pixel values of the plurality of target pixels and pixel values of the plurality of reference pixels, encoding information used in the filtering policy is the encoding information of the first to-be-filtered block and the encoding information of the filtering reference block, and a boundary of the filtering reference block and the first filtering boundary coincide on an edge of the polyhedron with the M faces.

With reference to the second possible implementation of the sixth aspect or the third possible implementation of the sixth aspect, in a fourth possible implementation of the sixth aspect, the encoding information includes at least one of a quantization parameter, an encoding mode, a quantization residual coefficient, and a motion parameter.

With reference to the sixth aspect, the first possible implementation of the sixth aspect, the second possible implementation of the sixth aspect, the third possible implementation of the sixth aspect, or the fourth possible implementation of the sixth aspect, in a fifth possible implementation of the sixth aspect, the plurality of reference pixels include at least one special pixel, and a pixel value of the special pixel is calculated through interpolation by using a pixel value of a pixel around the special pixel.

Technical effects of this embodiment are as follows: A corresponding point satisfying the foregoing geometrical relationship may coincide with an integer pixel or may coincide with a fraction pixel. If the corresponding point coincides with a fraction pixel, the fraction pixel generally has no pixel value. Therefore, a pixel value of the corresponding point needs to be calculated through interpolation by using an integer pixel around the corresponding point, thereby improving accuracy of the pixel value.

According to a seventh aspect, an embodiment of the present invention provides a de-blocking filtering method. The method includes: determining that a filtering boundary of a to-be-filtered block in a target image belongs to a boundary of any planar image, where the target image is a planar image obtained by splicing the planar images of a polyhedron with M faces, the planar image is a projected planar image of a panorama image in a direction, and M is greater than or equal to 4; determining a filtering reference block of the to-be-filtered block in the target image; and filtering the filtering boundary based on the to-be-filtered block and the filtering reference block.

In the foregoing steps, when filtering the to-be-filtered block in the two-dimensional planar image obtained by splicing the M planar images formed by mapping the pixels of the spherical panorama image to the polyhedron with the M faces, the terminal performs filtering not by using a pixel value of a pixel in a block bordering the to-be-filtered block in the filtering boundary in the two-dimensional plane, and instead performs filtering by using the pixel value of the pixel in the filtering reference block bordering the to-be-filtered block in the filtering boundary on the polyhedron. Because the pixel value in the filtering reference block and the pixel value in the to-be-filtered block are obtained by mapping pixel values of neighboring parts in the panorama image, content in the filtering reference block and the to-be-filtered block is desirably continuous and a de-blocking filtering effect is desirable.

With reference to the seventh aspect, in a first possible implementation of the seventh aspect, the determining that a filtering boundary of a to-be-filtered block in a target image belongs to a boundary of any planar image includes: determining, based on coordinates that are of the filtering boundary and that are in the target image and pre-determined coordinates that are of a pixel of the boundary in the planar image on the polyhedron with the M faces and that are in the target image, that the filtering boundary belongs to the boundary of the planar image.

With reference to the seventh aspect or the first possible implementation of the seventh aspect, in a second possible implementation of the seventh aspect, the filtering the filtering boundary based on the to-be-filtered block and the filtering reference block includes: determining, based on a pixel value of each pixel in a first pixel set of the to-be-filtered block and a pixel value of each pixel in a second pixel set of the filtering reference block, a filtering policy used for the filtering, where each of the first pixel set and the second pixel set is neighboring to the filtering boundary.

With reference to the seventh aspect, the first possible implementation of the seventh aspect, or the second possible implementation of the seventh aspect, in a third possible implementation of the seventh aspect, the filtering the filtering boundary based on the to-be-filtered block and the filtering reference block includes: determining, based on encoding information of the to-be-filtered block and encoding information of the filtering reference block, filtering strength used for the filtering.

With reference to the third possible implementation of the seventh aspect, in a fourth possible implementation of the seventh aspect, the encoding information includes at least one of a quantization parameter, an encoding mode, a quantization residual coefficient, and a motion parameter.

With reference to the seventh aspect, the first possible implementation of the seventh aspect, the second possible implementation of the seventh aspect, the third possible implementation of the seventh aspect, or the fourth possible implementation of the seventh aspect, in a fifth possible implementation of the seventh aspect, the determining a filtering reference block of the to-be-filtered block in the target image includes: determining a first adjacent block of the to-be-filtered block on the polyhedron with the M faces, where a border of the first adjacent block and the to-be-filtered block coincides with the filtering boundary; determining a location of the first adjacent block in the target image based on preconfigured layout information, where the layout information represents a splicing relationship between the planar images of the polyhedron with the M faces in the target image, and the splicing relationship includes at least one of an arrangement sequence and a rotation angle in splicing the planar images of the polyhedron with the M faces in the target image; and determining that the first adjacent block in the location is the filtering reference block.

With reference to the seventh aspect, the first possible implementation of the seventh aspect, the second possible implementation of the seventh aspect, the third possible implementation of the seventh aspect, the fourth possible implementation of the seventh aspect, or the fifth possible implementation of the seventh aspect, in a sixth possible implementation of the seventh aspect, the determining a filtering reference block of the to-be-filtered block in the target image includes: determining a second adjacent block of the to-be-filtered block in the target image as the filtering reference block, where a border of the second adjacent block and the to-be-filtered block coincides with the filtering boundary.

With reference to the sixth possible implementation of the seventh aspect, in a seventh possible implementation of the seventh aspect, after the determining a second adjacent block as the filtering reference block, the method further includes: determining a corrected pixel value of a pixel in the filtering reference block; and correspondingly, the determining, based on a pixel value of each pixel in a first pixel set of the to-be-filtered block and a pixel value of each pixel in a second pixel set of the filtering reference block, a filtering policy used for the filtering includes: determining, based on a pixel value of the first pixel set of the to-be-filtered block and a corrected pixel value of the second pixel set of the filtering reference block, the filtering policy used for the filtering.

With reference to the seventh possible implementation of the seventh aspect, in an eighth possible implementation of the seventh aspect, determining a pixel value of a corresponding point of the pixel in the filtering reference block as the corrected pixel value, where on the polyhedron with the M faces, the corresponding point is an intersecting point between a line connecting the pixel in the filtering reference block and the center of the polyhedron with the M faces and a planar image of the polyhedron with the M faces, and the pixel of the filtering reference block and the intersecting point are not in a same planar image.

That is, when filtering the to-be-filtered block in the two-dimensional planar image obtained by splicing the M planar images formed by mapping the pixels of the spherical panorama image to the polyhedron with the M faces, the terminal performs filtering by using pixel values of pixels in a planar image on another side of a pixel boundary in which the filtering boundary of the to-be-filtered block is located. Lines connecting the pixels and pixels to be used in the to-be-filtered block in the panorama image basically constitute smooth arc lines. Therefore, deformation between content of the to-be-filtered block and content in the planar image on the another side is relatively small, and a de-blocking filtering effect is desirable.

With reference to the eighth possible implementation of the seventh aspect, in a ninth possible implementation of the seventh aspect, when the intersecting point does not coincide with all integer pixels in the planar image, the method includes: calculating a pixel value of the intersecting point through interpolation by using a pixel around the intersecting point in the planar image; and using the pixel value obtained through interpolation as a pixel value of the corresponding point.

Technical effects of this embodiment are as follows: A corresponding point satisfying the foregoing geometrical relationship may coincide with an integer pixel or may coincide with a fraction pixel. If the corresponding point coincides with a fraction pixel, the fraction pixel generally has no pixel value. Therefore, a pixel value of the corresponding point needs to be calculated through interpolation by using an integer pixel around the corresponding point, thereby improving accuracy of the pixel value.

With reference to the seventh aspect, the first possible implementation of the seventh aspect, the second possible implementation of the seventh aspect, the third possible implementation of the seventh aspect, the fourth possible implementation of the seventh aspect, the fifth possible implementation of the seventh aspect, the sixth possible implementation of the seventh aspect, the seventh possible implementation of the seventh aspect, the eighth possible implementation of the seventh aspect, or the ninth possible implementation of the seventh aspect, in a tenth possible implementation of the seventh aspect, when it is determined that a filtering boundary of a to-be-filtered block in a target image does not belong to a boundary of any planar image, the method includes: filtering the filtering boundary based on pixels on two sides of the filtering boundary in the target image.

With reference to the seventh aspect, the first possible implementation of the seventh aspect, the second possible implementation of the seventh aspect, the third possible implementation of the seventh aspect, the fourth possible implementation of the seventh aspect, the fifth possible implementation of the seventh aspect, the sixth possible implementation of the seventh aspect, the seventh possible implementation of the seventh aspect, the eighth possible implementation of the seventh aspect, the ninth possible implementation of the seventh aspect, or the tenth possible implementation of the seventh aspect, in a eleventh possible implementation of the seventh aspect, after the filtering the filtering boundary based on a pixel of the to-be-filtered block and a pixel of the filtering reference block, the method further includes: generating an identifier, where the identifier is used to represent that filtering on the filtering boundary of the to-be-filtered block is completed.

Technical effects of this embodiment are as follows: a filtering boundary that is in the filtering reference block and that is close to the filtering block actually coincides with the filtering boundary. To be specific, when the filtering boundary is filtered, new pixel values are already calculated to replace pixel values of corresponding pixels in the to-be-filtered block and the filtering reference block. Therefore, when the filtering reference block is traversed to, the filtering boundary that is in the filtering reference block and that is close to the to-be-filtered block does not need to be filtered, thereby avoiding repeated calculation.

According to an eighth aspect, an embodiment of the present invention provides a terminal. The terminal includes a first determining unit, a second determining unit, and a filtering unit. The first determining unit is configured to determine that a filtering boundary of a to-be-filtered block in a target image belongs to a boundary of any planar image, where the target image is a planar image obtained by splicing the planar images of a polyhedron with M faces, the planar image is a projected planar image of a panorama image in a direction, and M is greater than or equal to 4. The second determining unit is configured to determine a filtering reference block of the to-be-filtered block in the target image. The filtering unit is configured to filter the filtering boundary based on the to-be-filtered block and the filtering reference block.

In execution of the foregoing units, when filtering the to-be-filtered block in the two-dimensional planar image obtained by splicing the M planar images formed by mapping the pixels of the spherical panorama image to the polyhedron with the M faces, the terminal performs filtering not by using a pixel value of a pixel in a block bordering the to-be-filtered block in the filtering boundary in the two-dimensional plane, and instead performs filtering by using the pixel value of the pixel in the filtering reference block bordering the to-be-filtered block in the filtering boundary on the polyhedron. Because the pixel value in the filtering reference block and the pixel value in the to-be-filtered block are obtained by mapping pixel values of neighboring parts in the panorama image, content in the filtering reference block and the to-be-filtered block is desirably continuous and a de-blocking filtering effect is desirable.

With reference to the eighth aspect, in a first possible implementation of the eighth aspect, the first determining unit is specifically configured to determine, based on coordinates that are of the filtering boundary and that are in the target image and pre-determined coordinates that are of a pixel of the boundary in the planar image on the polyhedron with the M faces and that are in the target image, that the filtering boundary belongs to the boundary of the planar image.

With reference to the eighth aspect or the first possible implementation of the eighth aspect, in a second possible implementation of the eighth aspect, the second determining unit is specifically configured to determine, based on a pixel value of each pixel in a first pixel set of the to-be-filtered block and a pixel value of each pixel in a second pixel set of the filtering reference block, a filtering policy used for the filtering, where each of the first pixel set and the second pixel set is neighboring to the filtering boundary.

With reference to the eighth aspect, the first possible implementation of the eighth aspect, or the second possible implementation of the eighth aspect, in a third possible implementation of the eighth aspect, the second determining unit is specifically configured to determine, based on encoding information of the to-be-filtered block and encoding information of the filtering reference block, filtering strength used for the filtering.

With reference to the third possible implementation of the eighth aspect, in a fourth possible implementation of the eighth aspect, the encoding information includes at least one of a quantization parameter, an encoding mode, a quantization residual coefficient, and a motion parameter.

With reference to the eighth aspect, the first possible implementation of the eighth aspect, the second possible implementation of the eighth aspect, the third possible implementation of the eighth aspect, or the fourth possible implementation of the eighth aspect, in a fifth possible implementation of the eighth aspect, the determining, by the second determining unit, a filtering reference block of the to-be-filtered block in the target image is specifically: determining a first adjacent block of the to-be-filtered block on the polyhedron with the M faces, where a border of the first adjacent block and the to-be-filtered block coincides with the filtering boundary; determining a location of the first adjacent block in the target image based on preconfigured layout information, where the layout information represents a splicing relationship between the planar images of the polyhedron with the M faces in the target image, and the splicing relationship includes at least one of an arrangement sequence and a rotation angle in splicing the planar images of the polyhedron with the M faces in the target image; and determining that the first adjacent block in the location is the filtering reference block.

With reference to the eighth aspect, the first possible implementation of the eighth aspect, the second possible implementation of the eighth aspect, the third possible implementation of the eighth aspect, the fourth possible implementation of the eighth aspect, or the fifth possible implementation of the eighth aspect, in a sixth possible implementation of the eighth aspect, the second determining unit is specifically configured to determine a second adjacent block of the to-be-filtered block in the target image as the filtering reference block, where a border of the second adjacent block and the to-be-filtered block coincides with the filtering boundary.

With reference to the sixth possible implementation of the eighth aspect, in a seventh possible implementation of the eighth aspect, the terminal further includes: a third determining unit, configured to determine a corrected pixel value of a pixel in the filtering reference block; and correspondingly, the determining, by the second determining unit based on a pixel value of each pixel in a first pixel set of the to-be-filtered block and a pixel value of each pixel in a second pixel set of the filtering reference block, a filtering policy used for the filtering is specifically: determining, based on a pixel value of the first pixel set of the to-be-filtered block and a corrected pixel value of the second pixel set of the filtering reference block, the filtering policy used for the filtering.

With reference to the seventh possible implementation of the eighth aspect, in an eighth possible implementation of the eighth aspect, the third determining unit is specifically configured to determine a pixel value of a corresponding point of the pixel in the filtering reference block as the corrected pixel value, where on the polyhedron with the M faces, the corresponding point is an intersecting point between a line connecting the pixel in the filtering reference block and the center of the polyhedron with the M faces and a planar image of the polyhedron with the M faces, and the pixel of the filtering reference block and the intersecting point are not in a same planar image.

That is, when filtering the to-be-filtered block in the two-dimensional planar image obtained by splicing the M planar images formed by mapping the pixels of the spherical panorama image to the polyhedron with the M faces, the terminal performs filtering by using pixel values of pixels in a planar image on another side of a pixel boundary in which the filtering boundary of the to-be-filtered block is located. Lines connecting the pixels and pixels to be used in the to-be-filtered block in the panorama image basically constitute smooth arc lines. Therefore, deformation between content of the to-be-filtered block and content in the planar image on the another side is relatively small, and a de-blocking filtering effect is desirable.

With reference to the eighth possible implementation of the eighth aspect, in a ninth possible implementation of the eighth aspect, the terminal further includes: a calculation unit, configured to: when the intersecting point does not coincide with all integer pixels in the planar image, calculate a pixel value of the intersecting point through interpolation by using a pixel around the intersecting point in the planar image; and an obtaining unit, configured to use the pixel value obtained through interpolation as a pixel value of the corresponding point.

Technical effects of this embodiment are as follows: A corresponding point satisfying the foregoing geometrical relationship may coincide with an integer pixel or may coincide with a fraction pixel. If the corresponding point coincides with a fraction pixel, the fraction pixel generally has no pixel value. Therefore, a pixel value of the corresponding point needs to be calculated through interpolation by using an integer pixel around the corresponding point, thereby improving accuracy of the pixel value.

With reference to the eighth aspect, the first possible implementation of the eighth aspect, the second possible implementation of the eighth aspect, the third possible implementation of the eighth aspect, the fourth possible implementation of the eighth aspect, the fifth possible implementation of the eighth aspect, the sixth possible implementation of the eighth aspect, the seventh possible implementation of the eighth aspect, the eighth possible implementation of the eighth aspect, or the ninth possible implementation of the eighth aspect, in a tenth possible implementation of the eighth aspect, when it is determined that a filtering boundary of a to-be-filtered block in a target image does not belong to a boundary of any planar image, the filtering unit is configured to filter the filtering boundary based on pixels on two sides of the filtering boundary in the target image.

With reference to the eighth aspect, the first possible implementation of the eighth aspect, the second possible implementation of the eighth aspect, the third possible implementation of the eighth aspect, the fourth possible implementation of the eighth aspect, the fifth possible implementation of the eighth aspect, the sixth possible implementation of the eighth aspect, the seventh possible implementation of the eighth aspect, the eighth possible implementation of the eighth aspect, or the ninth possible implementation of the eighth aspect, or the tenth possible implementation of the eighth aspect, in an eleventh possible implementation of the eighth aspect, the terminal further includes: a generation unit, configured to: after the filtering unit filters the filtering boundary based on a pixel of the to-be-filtered block and a pixel of the filtering reference block, generate an identifier, where the identifier is used to represent that filtering on the filtering boundary of the to-be-filtered block is completed.

Technical effects of this embodiment are as follows: a filtering boundary that is in the filtering reference block and that is close to the filtering block actually coincides with the filtering boundary. To be specific, when the filtering boundary is filtered, new pixel values are already calculated to replace pixel values of corresponding pixels in the to-be-filtered block and the filtering reference block. Therefore, when the filtering reference block is traversed to, the filtering boundary that is in the filtering reference block and that is close to the to-be-filtered block does not need to be filtered, thereby avoiding repeated calculation.

According to a ninth aspect, an embodiment of the present invention provides a terminal. The terminal includes a processor and a memory. The memory is configured to store a program and data, and the processor invokes the program in the memory to perform the following operations: determining that a filtering boundary of a to-be-filtered block in a target image belongs to a boundary of any planar image, where the target image is a planar image obtained by splicing the planar images of a polyhedron with M faces, the planar image is a projected planar image of a panorama image in a direction, and M is greater than or equal to 4; determining a filtering reference block of the to-be-filtered block in the target image; and filtering the filtering boundary based on the to-be-filtered block and the filtering reference block.

In execution of the foregoing operations, when filtering the to-be-filtered block in the two-dimensional planar image obtained by splicing the M planar images formed by mapping the pixels of the spherical panorama image to the polyhedron with the M faces, the terminal performs filtering not by using a pixel value of a pixel in a block bordering the to-be-filtered block in the filtering boundary in the two-dimensional plane, and instead performs filtering by using the pixel value of the pixel in the filtering reference block bordering the to-be-filtered block in the filtering boundary on the polyhedron. Because the pixel value in the filtering reference block and the pixel value in the to-be-filtered block are obtained by mapping pixel values of neighboring parts in the panorama image, content in the filtering reference block and the to-be-filtered block is desirably continuous and a de-blocking filtering effect is desirable.

With reference to the ninth aspect, in a first possible implementation of the ninth aspect, the determining, by the processor, that a filtering boundary of a to-be-filtered block in a target image belongs to a boundary of any planar image is specifically: determining, based on coordinates that are of the filtering boundary and that are in the target image and pre-determined coordinates that are of a pixel of the boundary in the planar image on the polyhedron with the M faces and that are in the target image, that the filtering boundary belongs to the boundary of the planar image.

With reference to the ninth aspect or the first possible implementation of the ninth aspect, in a second possible implementation of the ninth aspect, the filtering, by the processor, the filtering boundary based on the to-be-filtered block and the filtering reference block is specifically: determining, based on a pixel value of each pixel in a first pixel set of the to-be-filtered block and a pixel value of each pixel in a second pixel set of the filtering reference block, a filtering policy used for the filtering, where each of the first pixel set and the second pixel set is neighboring to the filtering boundary.

With reference to the ninth aspect, the first possible implementation of the ninth aspect, or the second possible implementation of the ninth aspect, in a third possible implementation of the ninth aspect, the filtering, by the processor, the filtering boundary based on the to-be-filtered block and the filtering reference block is specifically: determining, based on encoding information of the to-be-filtered block and encoding information of the filtering reference block, filtering strength used for the filtering.

With reference to the third possible implementation of the ninth aspect, in a fourth possible implementation of the ninth aspect, the encoding information includes at least one of a quantization parameter, an encoding mode, a quantization residual coefficient, and a motion parameter.

With reference to the ninth aspect, the first possible implementation of the ninth aspect, the second possible implementation of the ninth aspect, the third possible implementation of the ninth aspect, or the fourth possible implementation of the ninth aspect, in a fifth possible implementation of the ninth aspect, the determining, by the processor, a filtering reference block of the to-be-filtered block in the target image is specifically: determining a first adjacent block of the to-be-filtered block on the polyhedron with the M faces, where a border of the first adjacent block and the to-be-filtered block coincides with the filtering boundary; determining a location of the first adjacent block in the target image based on preconfigured layout information, where the layout information represents a splicing relationship between the planar images of the polyhedron with the M faces in the target image, and the splicing relationship includes at least one of an arrangement sequence and a rotation angle in splicing the planar images of the polyhedron with the M faces in the target image; and determining that the first adjacent block in the location is the filtering reference block.

With reference to the ninth aspect, the first possible implementation of the ninth aspect, the second possible implementation of the ninth aspect, the third possible implementation of the ninth aspect, the fourth possible implementation of the ninth aspect, or the fifth possible implementation of the ninth aspect, in a sixth possible implementation of the ninth aspect, the determining, by the processor, a filtering reference block of the to-be-filtered block in the target image is specifically: determining a second adjacent block of the to-be-filtered block in the target image as the filtering reference block, where a border of the second adjacent block and the to-be-filtered block coincides with the filtering boundary.

With reference to the sixth possible implementation of the ninth aspect, in a seventh possible implementation of the ninth aspect, after the determining a second adjacent block as the filtering reference block, the processor is further configured to: determine a corrected pixel value of a pixel in the filtering reference block; and correspondingly, the determining, based on a pixel value of each pixel in a first pixel set of the to-be-filtered block and a pixel value of each pixel in a second pixel set of the filtering reference block, a filtering policy used for the filtering includes: determining, based on a pixel value of the first pixel set of the to-be-filtered block and a corrected pixel value of the second pixel set of the filtering reference block, the filtering policy used for the filtering.

With reference to the seventh possible implementation of the ninth aspect, in an eighth possible implementation of the ninth aspect, the determining, by the processor, a corrected pixel value of a pixel in the filtering reference block is specifically: determining a pixel value of a corresponding point of the pixel in the filtering reference block as the corrected pixel value, where on the polyhedron with the M faces, the corresponding point is an intersecting point between a line connecting the pixel in the filtering reference block and the center of the polyhedron with the M faces and a planar image of the polyhedron with the M faces, and the pixel of the filtering reference block and the intersecting point are not in a same planar image.

That is, when filtering the to-be-filtered block in the two-dimensional planar image obtained by splicing the M planar images formed by mapping the pixels of the spherical panorama image to the polyhedron with the M faces, the terminal performs filtering by using pixel values of pixels in a planar image on another side of a pixel boundary in which the filtering boundary of the to-be-filtered block is located. Lines connecting the pixels and pixels to be used in the to-be-filtered block in the panorama image basically constitute smooth arc lines. Therefore, deformation between content of the to-be-filtered block and content in the planar image on the another side is relatively small, and a de-blocking filtering effect is desirable.

With reference to the eighth possible implementation of the ninth aspect, in a ninth possible implementation of the ninth aspect, when the intersecting point does not coincide with all integer pixels in the planar image, the processor is further configured to: calculate a pixel value of the intersecting point through interpolation by using a pixel around the intersecting point in the planar image; and use the pixel value obtained through interpolation as a pixel value of the corresponding point.

Technical effects of this embodiment are as follows: A corresponding point satisfying the foregoing geometrical relationship may coincide with an integer pixel or may coincide with a fraction pixel. If the corresponding point coincides with a fraction pixel, the fraction pixel generally has no pixel value. Therefore, a pixel value of the corresponding point needs to be calculated through interpolation by using an integer pixel around the corresponding point, thereby improving accuracy of the pixel value.

With reference to the ninth aspect, the first possible implementation of the ninth aspect, the second possible implementation of the ninth aspect, the third possible implementation of the ninth aspect, the fourth possible implementation of the ninth aspect, the fifth possible implementation of the ninth aspect, the sixth possible implementation of the ninth aspect, the seventh possible implementation of the ninth aspect, the eighth possible implementation of the ninth aspect, or the ninth possible implementation of the ninth aspect, in a tenth possible implementation of the ninth aspect, when it is determined that a filtering boundary of a to-be-filtered block in a target image does not belong to a boundary of any planar image, the processor is further configured to filter the filtering boundary based on pixels on two sides of the filtering boundary in the target image.

With reference to the ninth aspect, the first possible implementation of the ninth aspect, the second possible implementation of the ninth aspect, the third possible implementation of the ninth aspect, the fourth possible implementation of the ninth aspect, the fifth possible implementation of the ninth aspect, the sixth possible implementation of the ninth aspect, the seventh possible implementation of the ninth aspect, the eighth possible implementation of the ninth aspect, or the ninth possible implementation of the ninth aspect, or the tenth possible implementation of the ninth aspect, in an eleventh possible implementation of the ninth aspect, after filtering the filtering boundary based on a pixel of the to-be-filtered block and a pixel of the filtering reference block, the processor is further configured to generate an identifier, where the identifier is used to represent that filtering on the filtering boundary of the to-be-filtered block is completed.

Technical effects of this embodiment are as follows: a filtering boundary that is in the filtering reference block and that is close to the filtering block actually coincides with the filtering boundary. To be specific, when the filtering boundary is filtered, new pixel values are already calculated to replace pixel values of corresponding pixels in the to-be-filtered block and the filtering reference block. Therefore, when the filtering reference block is traversed to, the filtering boundary that is in the filtering reference block and that is close to the to-be-filtered block does not need to be filtered, thereby avoiding repeated calculation.

In implementation of the embodiments of the present invention, when filtering the first to-be-filtered block in the two-dimensional planar image obtained by splicing the M pixel areas formed by mapping the pixels of the spherical panorama image to the polyhedron with the M faces, the terminal performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

## BRIEF DESCRIPTION OF DRAWINGS

FIG. 1 is a schematic diagram of a mapping relationship between a panorama image and a polyhedron according to an embodiment of the present invention;
FIG. 2 is a schematic diagram of a principle of mapping between a panorama image and a polyhedron according to an embodiment of the present invention;
FIG. 3 is a schematic diagram of a scenario of splicing six planes of a hexahedron according to an embodiment of the present invention;
FIG. 4 is a schematic diagram of a corresponding table of parameters according to an embodiment of the present invention;

FIG. 5 is a schematic diagram of a manner of arranging pixels in a block P and a block Q according to an embodiment of the present invention;

FIG. 6 is a schematic flowchart of a de-blocking filtering method according to an embodiment of the present invention;

FIG. 7 is a schematic diagram of a correspondence between pixel areas according to an embodiment of the present invention;

FIG. 8 is a schematic flowchart of another de-blocking filtering method according to an embodiment of the present invention;

FIG. 9 is a schematic flowchart of another de-blocking filtering method according to an embodiment of the present invention;

FIG. 10 is a schematic structural diagram of a terminal according to an embodiment of the present invention;

FIG. 11 is a schematic structural diagram of another terminal according to an embodiment of the present invention;

FIG. 12 is a schematic structural diagram of another terminal according to an embodiment of the present invention;

FIG. 13 is a schematic structural diagram of another terminal according to an embodiment of the present invention;

FIG. 14 is a schematic structural diagram of another terminal according to an embodiment of the present invention;

FIG. 15 is a schematic structural diagram of another terminal according to an embodiment of the present invention;

FIG. 16 is a schematic structural diagram of another terminal according to an embodiment of the present invention; and

FIG. 17 is a schematic structural diagram of a video encoding and decoding system according to an embodiment of the present invention.

## DESCRIPTION OF EMBODIMENTS

The technical solutions according to embodiments of the present invention are clearly described in the following with reference to the accompanying drawings. The following embodiments are all supplements to the "several important procedures during de-blocking filtering" in the summary, and focus on a difference from the prior art.

The terminal described in the embodiments of the present invention may be a device or an apparatus having an image encoding or image decoding function, for example, a mobile phone, a television set, a tablet computer, a notebook computer, a palmtop computer, a mobile Internet device (English: mobile internet device, MID for short), a wearable device (for example, a smart watch (for example, an iWatch), a smart band, or a pedometer), or the like.

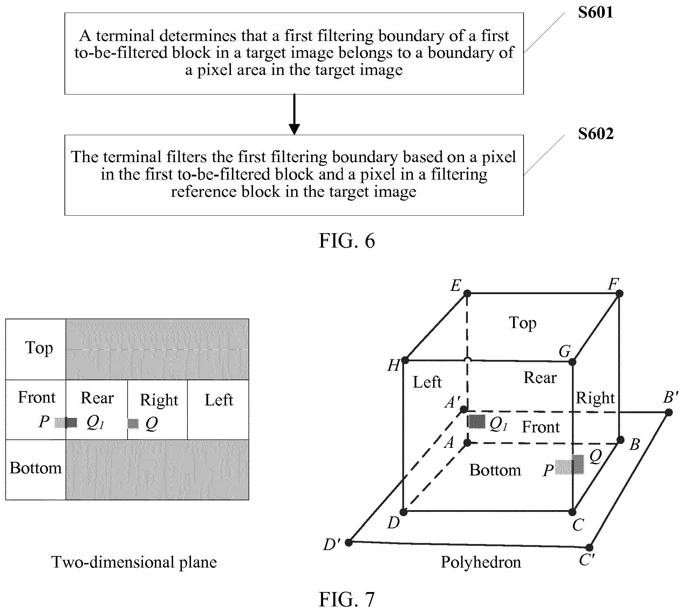

FIG. 6 is a schematic flowchart of a de-blocking filtering method according to an embodiment of the present invention. The method includes, but is not limited to, the following steps.

Step S601: A terminal determines that a first filtering boundary of a first to-be-filtered block in a target image belongs to a boundary of a pixel area in the target image.

Specifically, the target image is a planar image obtained by splicing M pixel areas, and the M pixel areas are M faces of a polyhedron with the M faces surrounding a spherical panorama image. The panorama image is usually obtained after processing images collected by a plurality of cameras, these images usually may be processed to obtain one spherical panorama image, and spherical panorama images in a same space at different moments constitute a panorama video that may also be referred to as a VR video or the like. If a first point, a second point, and the spherical center of the panorama image are on a same line, a pixel value of the first point is equal to that of the second point, the first point is a point on the polyhedron with the M faces, the second point is a point in the panorama image, and points on the polyhedron with the M faces are used to constitute the pixel area including pixels, and M is greater than or equal to 4. Preferably, M is equal to 6. The three points being on a same line herein may be implemented in the following manner:

Manner 1: Pixels are planned on each face of the polyhedron with the M faces, so that the pixels on each face constitute an array (the pixels forming the array may be referred to as integer pixels), then each pixel on each face is connected to a circle center of the panorama image to intersect with the panorama image, and an intersecting point with the panorama image usually is not an integer pixel in the panorama image. If the intersecting point is not an integer pixel, a pixel value of an integer pixel around the intersecting point is processed through interpolation, to calculate a pixel value at the intersecting point, and then the pixel value of the intersecting point is used as the pixel value of the pixel that is on a same line as the circle center and the intersecting point on the polyhedron. Correspondingly, that points on the polyhedron with the M faces are used to constitute a pixel area including pixels means that pixels having pixel values on the polyhedron with the M faces are used to constitute a pixel area.

Manner 2: A line between the circle center of the panorama image and each integer pixel in the panorama image is connected to intersect with the polyhedron with the M faces. If an intersecting point of the connection line and the polyhedron with the M faces, the circle center, and a pixel in the panorama image are on a same line, a pixel value of the pixel is used as a pixel value of the intersecting point. Further, pixels are planned on each face of the polyhedron with the M faces, so that the pixels on each face constitute an array. Correspondingly, that points on the polyhedron with the M faces are used to constitute a pixel area including pixels specifically means that if a pixel on the polyhedron with the M faces coincides with an intersecting point on the polyhedron with the M faces, a pixel value of the intersecting point is used as a pixel value of the pixel. If the pixel does not coincide with the intersecting point on the polyhedron with the M faces, an intersecting point around the pixel is processed through interpolation, to calculate the pixel value of the pixel. Pixels having pixel values constitute the pixel area.

In addition, the terminal may prestore information used to describe the first filtering boundary, and information about the boundary of the pixel area in the target image, and may compare the information to determine whether the first filtering boundary is a part of the boundary of the pixel area. If the first filtering boundary is a part of the boundary of the pixel area, it indicates that the first filtering boundary belongs to the boundary of the pixel area. For example, that the first filtering boundary belongs to the boundary of the pixel area may be determined based on prestored coordinates of a point on the boundary of the pixel area in the target image and prestored coordinates of a point on the first filtering boundary of the first to-be-filtered block. Specifically, a coordinate system is established in the target image in advance, and whether the first filtering boundary belongs to the boundary of the pixel area may be determined based on the coordinates of the point on the first filtering boundary and the coordinates of the point in the pixel area.

Step S602: The terminal filters the first filtering boundary based on a pixel in the first to-be-filtered block and a pixel in a filtering reference block in the target image.

Specifically, any pixel area and any block on the polyhedron with the M faces have fixed locations on the polyhedron with the M faces, and any pixel area and any block also have fixed locations in the target image. A boundary of the filtering reference block and the first filtering boundary coincide on an edge of the polyhedron with the M faces. As shown in FIG. 7, if a block P is the first to-be-filtered block, a block Q is the filtering reference block instead of Q1. This is because the relationship between the block P and the block Q on the polyhedron satisfy the relationship between the filtering reference block and the first to-be-filtered block described above. Pixels in the first to-be-filtered block whose distances to the edge are in ascending order are sequentially $P_{0,X}$, $P_{1,X}$, $P_{2,X}$, $P_{3,X}$, and the like; pixels in the filtering reference block whose distances to the edge are in ascending order are sequentially $P_{0,X}$, $Q_{1,X}$, $Q_{2,X}$, $Q_{3,X}$, and the like, where X herein may be 0, 1, 2, or 3. Optionally, layout information may be preconfigured to mark a correspondence between a location of each block on the polyhedron with the M faces and a location of the block in the panorama image, or a connection relationship between the M pixel areas on the polyhedron with the M faces. The terminal may determine the filtering reference block of the to-be-filtered block in the target image based on the layout information.

Optionally, the first filtering boundary is filtered based on pixels on two sides of the first filtering boundary on the polyhedron with the M faces. The to-be-filtered block and the filtering reference block herein respectively correspond to the block P and the block Q described in the "summary", and the first filtering boundary herein is the filtering boundary. The pixel in the to-be-filtered block and the pixel in the filtering reference block used to filter the first filtering boundary are sequentially arranged, and a distance between any two neighboring pixels is equal to a minimum pixel distance. For a pixel determining manner, calculation of new pixel values based on pixel values of pixels to replace the pixel values of the pixels to filter the first filtering boundary, and the like, refer to the foregoing description of filtering of the filtering boundary between the block P and the block Q.

{In an optional solution, after the filtering the first filtering boundary based on a pixel in the first to-be-filtered block and a pixel in a filtering reference block in the target image, the de-blocking filtering method may further include: generating a reference identifier, where the reference identifier is used to instruct to no longer filter, when the filtering reference block is traversed to in a filtering process, a boundary that is of the filtering reference block and that is close to the first to-be-filtered block. In other words, if traversing to the filtering reference block in a de-blocking filtering process, the terminal may learn, based on the reference identifier, that the filtering boundary that is in the filtering reference block and that is close to the first to-be-filtered block has been filtered, and the filtering boundary that is in the filtering reference block and that is close to the first to-be-filtered block does not need to be filtered. Reasons for this practice are as follows: a filtering boundary that is in the filtering reference block and that is close to the first filtering block actually coincides with the first filtering boundary. To be specific, when the first filtering boundary is filtered, new pixel values are already calculated to replace pixel values of corresponding pixels in the first to-be-filtered block and the filtering reference block. Therefore, when the filtering reference block is traversed to, the filtering boundary that is in the filtering reference block and that is close to the first to-be-filtered block does not need to be filtered. It should be understood that traversing in this embodiment of the present invention means performing a filtering operation on the entire target image. In an optional solution, performing a filtering operation on the entire target image includes: sequentially traversing each planar image for a target image; sequentially traversing each filtering area, that is, a to-be-filtered area on the boundary for a planar image; and sequentially traversing each block for each filtering area. For example, each planar image in a current image may be traversed based on a scanning sequence; each filtering area on a current face is traversed based on a sequence of a top boundary, a right boundary, a bottom boundary, and a left boundary; and each small block in a current filtering area is traversed based on a sequence of from top to bottom and from left to right.

In another optional solution, the de-blocking filtering method further includes: determining, by the terminal, that a second filtering boundary of a second to-be-filtered block does not belong to the boundary of the pixel area in the target image; and filtering, by the terminal, the second filtering boundary based on pixels on two sides of the second filtering boundary in the target image.

In other words, if traversing to the second to-be-filtered block in a de-blocking filtering process, the terminal determines whether the filtering boundary of the second to-be-filtered block belongs to the boundary of the pixel area, where the filtering boundary of the second to-be-filtered block may be referred to as the second filtering boundary. A manner of determining whether the second filtering boundary belongs to the boundary of the pixel area is the same as that of determining whether the first filtering boundary belongs to the boundary of the pixel area. If the second filtering boundary is not the boundary of the pixel area, the second filtering boundary is filtered directly by using pixels in blocks on two sides of the second filtering boundary in the target image. This is the same as the prior art.

In the method shown in FIG. 6, when filtering the first to-be-filtered block in the two-dimensional planar image obtained by splicing the M pixel areas formed by mapping the pixels of the spherical panorama image to the polyhedron with the M faces, the terminal performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

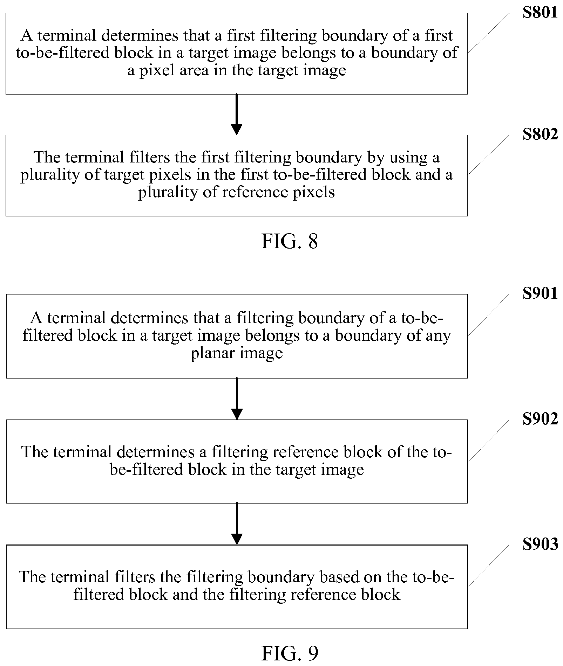

FIG. 8 is a schematic flowchart of another de-blocking filtering method according to an embodiment of the present invention. The method includes, but is not limited to, the following steps.

Step S801: A terminal determines that a first filtering boundary of a first to-be-filtered block in a target image belongs to a boundary of a pixel area in the target image.

Specifically, the target image is a planar image obtained by splicing M pixel areas, the M pixel areas are M faces of a polyhedron with the M faces that surrounds a spherical panorama image, if a first point, a second point, and the spherical center of the panorama image are on a same line, a pixel value of the first point is equal to that of the second point, the first point is a point on the polyhedron with the M faces, the second point is a point in the panorama image, and points on the polyhedron with the M faces are used to constitute a pixel area including pixels, and M is greater than or equal to 4. For step S801, refer to the foregoing detailed analysis of step S601, and details are not described herein again.

Step S802: The terminal filters the first filtering boundary by using a plurality of target pixels in the first to-be-filtered block and a plurality of reference pixels.

Specifically, the first to-be-filtered block is within a first pixel area and the reference pixel is within a second pixel area, the first pixel area and the second pixel area are connected to each other on the polyhedron with the M faces, a plurality of intersecting points of an extended line of a line connecting the spherical center and the plurality of reference pixels and a plane in which a pixel area to which the first to-be-filtered block belongs is located are symmetrical to the plurality of target pixels by using the first filtering boundary as an axis of symmetry, and in the polyhedron with the M faces, the first filtering boundary is on an edge connecting the first pixel area to the second pixel area. Pixels whose distances to the first filtering boundary are in ascending order are sequentially $P_{0,X}$, $P_{1,X}$, $P_{2,X}$, $P_{3,X}$, and the like in the first to-be-filtered block, where X herein may be 0, 1, 2, or 3.

In an optional solution, the plurality of reference pixels include at least one special pixel, and a pixel value of the special pixel is calculated through interpolation by using a pixel value of a pixel around the special pixel. Reasons for this practice are as follows: the plurality of reference pixels satisfying the foregoing geometrical relationship may include an integer pixel or may include a non-integer pixel, that is, the special pixel. Generally, the special pixel originally has no pixel value. Therefore, a pixel value of the special pixel needs to be calculated through interpolation by using an integer pixel around the special pixel.

In another optional solution, the de-blocking filtering method further includes: determining, by the terminal, that a second filtering boundary of a second to-be-filtered block does not belong to the boundary of the pixel area in the target image; and filtering, by the terminal, the second filtering boundary based on pixels on two sides of the second filtering boundary in the target image.

In other words, if traversing to the second to-be-filtered block in a de-blocking filtering process, the terminal determines whether the filtering boundary of the second to-be-filtered block belongs to the boundary of the pixel area, where the filtering boundary of the second to-be-filtered block may be referred to as the second filtering boundary. A manner of determining whether the second filtering boundary belongs to the boundary of the pixel area is the same as that of determining whether the first filtering boundary belongs to the boundary of the pixel area. If the second filtering boundary is not the boundary of the pixel area, the second filtering boundary is filtered directly by using pixels in blocks on two sides of the second filtering boundary in the target image. This is the same as the prior art.

In another optional solution, boundary filtering strength BS with reference to which the first filtering boundary is filtered is calculated based on coding information of the first to-be-filtered block and coding information of the filtering reference block. The coding information includes a quantization parameter (for example, a QP), a coding mode (for example, intra prediction and inter prediction), a quantization residual coefficient (for example, a CBF), a motion parameter (for example, a reference image index and a motion vector), and the like. Calculation of the boundary filtering strength BS is described in the "summary", and details are not described herein again. A boundary of the filtering reference block and the first filtering boundary coincide on an edge of the polyhedron with the M faces. The foregoing has described the filtering reference block, and details are not described herein again.

In another optional solution, pixel values used in a filtering decision with reference to which the first filtering boundary is filtered are pixel values of the plurality of target pixels and pixel values of the plurality of reference pixels, and coding information used in the filtering policy is the coding information of the first to-be-filtered block and the coding information of the filtering reference block. A manner of determining the filtering decision has been described in the "summary", and details are not described herein again.

In the method shown in FIG. 8, when filtering the first to-be-filtered block in the two-dimensional planar image obtained by splicing the M pixel areas formed by mapping the pixels of the spherical panorama image to the polyhedron with the M faces, the terminal performs filtering by using pixel values of pixels in a pixel area on another side of a pixel boundary in which the first filtering boundary of the first to-be-filtered block is located. Lines connecting the pixels and pixels to be used in the first to-be-filtered block in the panorama image basically constitute smooth arc lines. Therefore, deformation between content of the first to-be-filtered block and content in the pixel area on the another side is relatively small, and a de-blocking filtering effect is desirable.

FIG. 9 is a schematic flowchart of another de-blocking filtering method according to an embodiment of the present invention. The method includes, but is not limited to, the following steps.

Step S901: A terminal determines that a filtering boundary of a to-be-filtered block in a target image belongs to a boundary of any planar image.

Specifically, the target image is a planar image obtained by splicing the planar images of a polyhedron with M faces, the planar image is a projected planar image of a panorama image in a direction, and M is an integer greater than or equal to 4. In an optional solution, the target image is a planar image obtained by splicing M planar images, and the M planar images are M faces of a polyhedron with the M faces surrounding a spherical panorama image. The panorama image is usually obtained after processing images collected by a plurality of cameras, these images usually may be processed to obtain one spherical panorama image, and spherical panorama images in a same space at different moments constitute a panorama video that may also be referred to as a VR video or the like. If a first point, a second point, and the spherical center of the panorama image are on a same line, a pixel value of the first point is equal to that of the second point, the first point is a point on the polyhedron with the M faces, the second point is a point in the panorama image, and points on the polyhedron with the M faces are used to constitute the planar image including pixels, and M is greater than or equal to 4. Preferably, M is equal to 6. The three points being on a same line herein may be implemented in the following manner:

Manner 1: Pixels are planned on each face of the polyhedron with the M faces, so that the pixels on each face constitute an array (the pixels forming the array may be referred to as integer pixels), then each pixel on each face is connected to a circle center of the panorama image to intersect with the panorama image, and an intersecting point with the panorama image usually is not an integer pixel in the panorama image. If the intersecting point is not an integer pixel, a pixel value of an integer pixel around the intersecting point is processed through interpolation, to calculate a pixel value at the intersecting point, and then the pixel value of the intersecting point is used as the pixel value of the pixel that is on a same line as the circle center and the intersecting point on the polyhedron. Correspondingly, that points on the polyhedron with the M faces are used to constitute the planar image including pixels means that pixels having pixel values on the polyhedron with the M faces are used to constitute a planar image.

Manner 2: A line between the circle center of the panorama image and each integer pixel in the panorama image is connected to intersect with the polyhedron with the M faces. If an intersecting point of the connection line and the polyhedron with the M faces, the circle center, and a pixel in the panorama image are on a same line, a pixel value of the pixel is used as a pixel value of the intersecting point. Further, pixels are planned on each face of the polyhedron with the M faces, so that the pixels on each face constitute an array. Correspondingly, that points on the polyhedron with the M faces are used to constitute the planar image including pixels specifically means that if a pixel on the polyhedron with the M faces coincides with an intersecting point on the polyhedron with the M faces, a pixel value of the intersecting point is used as a pixel value of the pixel. If the pixel does not coincide with the intersecting point on the polyhedron with the M faces, an intersecting point around the pixel is processed through interpolation, to calculate the pixel value of the pixel. Pixels having pixel values constitute the planar image.

In addition, the terminal may prestore information used to describe the filtering boundary, and information about the boundary of the planar image in the target image, and may compare the information to determine whether the filtering boundary is a part of the boundary of the planar image. If the filtering boundary is a part of the boundary of the planar image, it indicates that the filtering boundary belongs to the boundary of the planar image. For example, that the filtering boundary belongs to the boundary of the planar image may be determined based on prestored coordinates of a point on the boundary of the planar image in the target image and prestored coordinates of a point on the filtering boundary of the to-be-filtered block. Specifically, a coordinate system is established in the target image in advance, and whether the filtering boundary belongs to the boundary of the planar image may be determined based on the coordinates of the point on the filtering boundary and the coordinates of the point in the planar image.

Step S902: The terminal determines a filtering reference block of the to-be-filtered block in the target image.

Specifically, any planar image and any block on the polyhedron with the M faces have fixed locations on the polyhedron with the M faces, and any planar image and any block also have fixed locations in the target image. A boundary of the filtering reference block and the filtering boundary coincide on an edge of the polyhedron with the M faces. As shown in FIG. 7, if a block P is the to-be-filtered block, a block Q is the filtering reference block instead of Q1. This is because a relationship between the block P and the block Q on the polyhedron satisfy the relationship between the filtering reference block and the to-be-filtered block described above. Pixels in the to-be-filtered block whose distances to the edge are in ascending order are sequentially $P_{0,X}$, $P_{1,X}$, $P_{2,X}$, $P_{3,X}$, and the like; and Pixels in the filtering reference block whose distances to the edge are in ascending order are sequentially $P_{0,X}$, $Q_{1,X}$, $Q_{2,X}$, $Q_{3,X}$, and the like, where X herein may be 0, 1, 2, or 3. Optionally, layout information may be preconfigured to mark a correspondence between a location of each block on the polyhedron with the M faces and a location of the block in the panorama image, or a connection relationship between the M planar images on the polyhedron with the M faces. The terminal may determine the filtering reference block of the to-be-filtered block in the target image based on the layout information.

In an optional solution, the determining a filtering reference block of the to-be-filtered block in the target image includes:

determining a first adjacent block of the to-be-filtered block on the polyhedron with the M faces, where a border of the first adjacent block and the to-be-filtered block coincides with the filtering boundary; determining a location of the first adjacent block in the target image based on preconfigured layout information, where the layout information represents a splicing relationship between the planar images of the polyhedron with the M faces in the target image, and the splicing relationship includes at least one of an arrangement sequence and a rotation angle in splicing the planar images of the polyhedron with the M faces in the target image; and determining that the first adjacent block in the location is the filtering reference block. In other words, the filtering reference block of the to-be-filtered block is determined by using a location relationship between blocks on the polyhedron with the M faces. Specifically, a block that has a boundary coinciding with that of the to-be-filtered block and that is on the edge of the polyhedron with the M faces is used as the filtering reference block. To be distinguished from related content in a subsequent optional solution, this optional solution may be referred to as an optional solution A.

Step S903: The terminal filters the filtering boundary based on the to-be-filtered block and the filtering reference block.

In an optional solution, the filtering the filtering boundary based on the to-be-filtered block and the filtering reference block includes: determining, based on a pixel value of each pixel in a first pixel set of the to-be-filtered block and a pixel value of each pixel in a second pixel set of the filtering reference block, a filtering policy used for the filtering, where each of the first pixel set and the second pixel set is neighboring to the filtering boundary. It may be understood that the pixels in the first pixel set are similar to $P_{0,X}$, $P_{1,X}$, $P_{2,X}$, $P_{3,X}$, and the like in FIG. 7, and the pixels in the second pixel set are similar to $P_{0,X}$, $Q_{1,X}$, $Q_{2,X}$, $Q_{3,X}$, and the like in FIG. 7, where X herein may be 0, 1, 2, or 3.

In another optional solution, the filtering the filtering boundary based on the to-be-filtered block and the filtering reference block includes:

determining, based on encoding information of the to-be-filtered block and encoding information of the filtering reference block, filtering strength used for the filtering. In other words, boundary filtering strength BS with reference to which the filtering boundary is filtered is calculated based on coding information of the to-be-filtered block and coding information of the filtering reference block. The coding information includes a quantization parameter (for example, a QP), a coding mode (for example, intra prediction and inter prediction), a quantization residual coefficient (for example, a CBF), a motion parameter (for example, a reference image index and a motion vector), and the like. Calculation of the boundary filtering strength BS is described in the "summary", and details are not described herein again.

In another optional solution, when determining that a filtering boundary of a to-be-filtered block in a target image does not belong to a boundary of any planar image, the method further includes: filtering the filtering boundary based on pixels on two sides of the filtering boundary in the target image. In other words, if it is determined that the filtering boundary does not belong to a boundary of any planar image, the filtering boundary is filtered directly by using pixels in blocks on two sides of the filtering boundary in the target image. This is the same as the prior art.

In another optional solution, after the filtering the filtering boundary based on a pixel of the to-be-filtered block and a pixel of the filtering reference block, the method further includes: generating an identifier, where the identifier is used to represent that filtering on the filtering boundary of the to-be-filtered block is completed. In other words, if traversing to the filtering reference block in a de-blocking filtering process, the terminal may learn, based on the identifier, that the filtering boundary that is in the filtering reference block and that is close to the to-be-filtered block has been filtered, and the filtering boundary that is in the filtering reference block and that is close to the to-be-filtered block does not need to be filtered. Reasons for this practice are as follows: a filtering boundary that is in the filtering reference block and that is close to the filtering block actually coincides with the filtering boundary. To be specific, when the filtering boundary is filtered, new pixel values are already calculated to replace pixel values of corresponding pixels in the to-be-filtered block and the filtering reference block. Therefore, when the filtering reference block is traversed to, the filtering boundary that is in the filtering reference block and that is close to the to-be-filtered block does not need to be filtered. It should be understood that traversing in this embodiment of the present invention means performing a filtering operation on the entire target image. In an optional solution, performing a filtering operation on the entire target image includes: sequentially traversing each planar image for a target image; sequentially traversing each filtering area, that is, a to-be-filtered area on the boundary for a planar image; and sequentially traversing each block for each filtering area. For example, each planar image in a current image may be traversed based on a scanning sequence; each filtering area on a current face is traversed based on a sequence of a top boundary, a right boundary, a bottom boundary, and a left boundary; and each small block in a current filtering area is traversed based on a sequence of from top to bottom and from left to right.

In another optional solution, the determining a filtering reference block of the to-be-filtered block in the target image includes:

determining a second adjacent block of the to-be-filtered block in the target image as the filtering reference block, wherein a border of the second adjacent block and the to-be-filtered block coincides with the filtering boundary. The second adjacent block is determined as the filtering reference block. To be distinguished from the foregoing optional solution, this optional solution may be referred to as an optional solution B. Optionally, after the determining a second adjacent block as the filtering reference block, the method further includes: determining a corrected pixel value of a pixel in the filtering reference block; and correspondingly, the determining, based on a pixel value of each pixel in a first pixel set of the to-be-filtered block and a pixel value of each pixel in a second pixel set of the filtering reference block, a filtering policy used for the filtering includes: determining, based on a pixel value of the first pixel set of the to-be-filtered block and a corrected pixel value of the second pixel set of the filtering reference block, the filtering policy used for the filtering, including filtering the filtering boundary. Optionally, the determining a corrected pixel value of a pixel in the filtering reference block includes: determining a pixel value of a corresponding point of the pixel in the filtering reference block as the corrected pixel value, wherein on the polyhedron with the M faces, the corresponding point is an intersecting point between a line connecting the pixel in the filtering reference block and the center of the polyhedron with the M faces and a planar image of the polyhedron with the M faces, and the pixel of the filtering reference block and the intersecting point are not in a same planar image. Reasons for this practice are as follows: When filtering the to-be-filtered block in the two-dimensional planar image obtained by splicing the M planar images formed by mapping the pixels of the spherical panorama image to the polyhedron with the M faces, the terminal performs filtering by using pixel values of pixels in a planar image on another side of a pixel boundary in which the filtering boundary of the to-be-filtered block is located. Lines connecting the pixels and pixels to be used in the to-be-filtered block in the panorama image basically constitute smooth arc lines. Therefore, deformation between content of the to-be-filtered block and content in the planar image on the side is relatively small, and a de-blocking filtering effect is desirable. It should be noted that in this optional solution, filtering strength used to filter the filtering boundary may be calculated based on the coding information of the to-be-filtered block and the coding information of the filtering reference block in the optional solution A (not the filtering reference block in the optional solution B). A pixel value used in the filtering decision with reference to which the filtering boundary is filtered is the pixel value of the pixel in the to-be-filtered block and the corrected pixel value. The coding information used in the filtering policy is the coding information of the to-be-filtered block and the coding information of the filtering reference block in the optional solution a (not the filtering reference block in the optional solution B).

Optionally, when the intersecting point does not coincide with all integer pixels in the planar image, the method further includes: calculating a pixel value of the intersecting point through interpolation by using a pixel around the intersecting point in the planar image; and using the pixel value obtained through interpolation as a pixel value of the corresponding point. Reasons for this practice are as follows: A corresponding point satisfying the foregoing geometrical relationship may coincide with an integer pixel or may coincide with a fraction pixel. If the corresponding point coincides with a fraction pixel, the fraction pixel generally has no pixel value. Therefore, a pixel value of the corresponding point needs to be calculated through interpolation by using an integer pixel around the corresponding point.

In the method shown in FIG. 9, when filtering the to-be-filtered block in the two-dimensional planar image obtained by splicing the M planar images formed by mapping the pixels of the spherical panorama image to the polyhedron with the M faces, the terminal performs filtering not by using a pixel value of a pixel in a block bordering the to-be-filtered block in the filtering boundary in the two-dimensional the plane, and instead performs filtering by using the pixel value of the pixel in the filtering reference block bordering the to-be-filtered block in the filtering boundary on the polyhedron. Because the pixel value in the filtering reference block and the pixel value in the to-be-filtered block are obtained by mapping pixel values of neighboring parts in the panorama image, content in the filtering reference block and the to-be-filtered block is desirably continuous and a de-blocking filtering effect is desirable.

The method in the embodiments of the present invention is described in detail above. For ease of better implementing the foregoing solutions in the embodiments of the present invention, an apparatus in an embodiment of the present invention is correspondingly provided in the following.

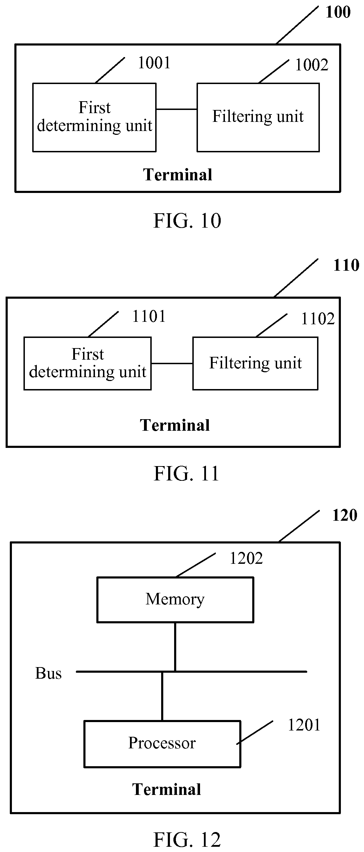

FIG. 10 is a schematic structural diagram of a terminal 100 according to an embodiment of the present invention.

The terminal 100 may include a first determining unit 1001 and a filtering unit 1002. Detailed descriptions of each unit are as follows.

The first determining unit 1001 is configured to determine that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and the spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4.

The filtering unit 1002 is configured to filter the first filtering boundary based on a pixel in the first to-be-filtered block and a pixel in a filtering reference block in the target image, where a boundary of the filtering reference block and the first filtering boundary coincide on an edge of the polyhedron with the M faces.

In execution of the foregoing units, when filtering the first to-be-filtered block in the two-dimensional planar image obtained by splicing the M pixel areas formed by mapping the pixels of the spherical panorama image to the polyhedron with the M faces, the terminal performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

In an optional solution, the terminal 100 further includes a second determining unit. The second determining unit is configured to: after the first determining unit 1001 determines that a first filtering boundary of a first to-be-filtered block in a target image belongs to a boundary of a pixel area in the target image, before the filtering unit 1002 filters the first filtering boundary based on a pixel in the first to-be-filtered block and a pixel in a filtering reference block in the target image, determine the filtering reference block of the first to-be-filtered block in the target image based on preconfigured layout information, where the layout information indicates a connection relationship of the M pixel areas in the polyhedron with the M faces.

In another optional solution, the first determining unit 1001 is specifically configured to determine, based on prestored coordinates of a point on the boundary of the pixel area in the target image and prestored coordinates of a point on the first filtering boundary of the first to-be-filtered block, that the first filtering boundary belongs to the boundary of the pixel area.

In another optional solution, the filtering unit 1002 is specifically configured to filter the first filtering boundary based on pixels on two sides of the first filtering boundary on the polyhedron with the M faces.

In another optional solution, the first determining unit is further configured to determine that a second filtering boundary of a second to-be-filtered block does not belong to the boundary of the pixel area in the target image; and the filtering unit is further configured to filter the second filtering boundary based on pixels on two sides of the second filtering boundary in the target image.

In another optional solution, the terminal 100 further includes a generation unit. The generation unit is configured to: after the filtering unit filters the first filtering boundary based on the pixel in the first to-be-filtered block and the pixel in the filtering reference block in the target image, generate a reference identifier, where the reference identifier is used to instruct to no longer filter, when the filtering reference block is traversed to in a filtering process, a boundary that is of the filtering reference block and that is close to the first to-be-filtered block.

It should be noted that for specific implementation of each unit, correspondingly refer to the corresponding descriptions in the method embodiment shown in FIG. 6.

When filtering the first to-be-filtered block in the two-dimensional planar image obtained by splicing the M pixel areas formed by mapping the pixels of the spherical panorama image to the polyhedron with the M faces, the terminal 100 shown in FIG. 10 performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

FIG. 11 is a schematic structural diagram of another terminal 110 according to an embodiment of the present invention. The terminal 110 may include a first determining unit 1101 and a filtering unit 1102. Detailed descriptions of each unit are as follows.

The first determining unit 901 is configured to determine that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and the spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4.

The filtering unit 902 is configured to filter the first filtering boundary by using a plurality of target pixels in the first to-be-filtered block and a plurality of reference pixels, where the first to-be-filtered block is within a first pixel area and the reference pixel is within a second pixel area, the first pixel area and the second pixel area are connected to each other on the polyhedron with the M faces, a plurality of intersecting points of an extended line of a line connecting the spherical center and the plurality of reference pixels and a plane in which a pixel area to which the first to-be-filtered block belongs is located are symmetrical to the plurality of target pixels by using the first filtering boundary as an axis of symmetry, and in the polyhedron with the M faces, the first filtering boundary is on an edge connecting the first pixel area to the second pixel area.

In execution of the foregoing units, when filtering the first to-be-filtered block in the two-dimensional planar image obtained by splicing the M pixel areas formed by mapping the pixels of the spherical panorama image to the polyhedron with the M faces, the terminal performs filtering by using pixel values of pixels in a pixel area on another side of a pixel boundary in which the first filtering boundary of the first to-be-filtered block is located. Lines connecting the pixels and pixels to be used in the first to-be-filtered block in the panorama image basically constitute smooth arc lines. Therefore, deformation between content of the first to-be-filtered block and content in the pixel area on the another side is relatively small, and a de-blocking filtering effect is desirable.

In an optional solution, the first determining unit 1101 is further configured to determine that a second filtering boundary of a second to-be-filtered block does not belong to the boundary of the pixel area in the target image; and the filtering unit 1102 is further configured to filter the second filtering boundary based on pixels on two sides of the second filtering boundary in the target image.

In another optional solution, boundary filtering strength BS with reference to which the first filtering boundary is filtered is calculated based on encoding information of the first to-be-filtered block and encoding information of the filtering reference block, and a boundary of the filtering reference block and the first filtering boundary coincide on an edge of the polyhedron with the M faces.

In another optional solution, pixel values used in a filtering decision with reference to which the first filtering boundary is filtered are pixel values of the plurality of target pixels and pixel values of the plurality of reference pixels, encoding information used in the filtering policy is the encoding information of the first to-be-filtered block and the encoding information of the filtering reference block, and a boundary of the filtering reference block and the first filtering boundary coincide on an edge of the polyhedron with the M faces.

In another optional solution, the encoding information includes at least one of a quantization parameter, an encoding mode, a quantization residual coefficient, and a motion parameter.

In another optional solution, the plurality of reference pixels include at least one special pixel, and a pixel value of the special pixel is calculated through interpolation by using a pixel value of a pixel around the special pixel.

It should be noted that for specific implementation of each unit, correspondingly refer to the corresponding descriptions in the method embodiment shown in FIG. 8.

When filtering the first to-be-filtered block in the two-dimensional planar image obtained by splicing the M pixel areas formed by mapping the pixels of the spherical panorama image to the polyhedron with the M faces, the terminal 110 shown in FIG. 11 performs filtering by using pixel values of pixels in a pixel area on another side of a pixel boundary in which the first filtering boundary of the first to-be-filtered block is located. Lines connecting the pixels and pixels to be used in the first to-be-filtered block in the panorama image basically constitute smooth arc lines. Therefore, deformation between content of the first to-be-filtered block and content in the pixel area on the another side is relatively small, and a de-blocking filtering effect is desirable.

FIG. 12 shows another terminal 120 according to an embodiment of the present invention. The terminal 120 includes a processor 1201 and a memory 1202, and the processor 1201 and the memory 1202 are connected to each other by using a bus.

The memory 1202 includes but is not limited to a random access memory (RAM), a read-only memory (ROM), an erasable programmable read-only memory (EPROM or flash memory), or a portable read-only memory (CD-ROM), and the memory 1202 is used for a related instruction and data.

The processor 1201 may be one or more central processing units (English: Central Processing Unit, CPU for short). When the processor 1201 is a CPU, the CPU may be a single-core CPU or may be a multi-core CPU.

The processor 1201 of the terminal 120 is configured to read program code stored in the memory 1202, to perform the following operations:

determining that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4; and

filtering the first filtering boundary based on a pixel in the first to-be-filtered block and a pixel in a filtering reference block in the target image, where a boundary of the filtering reference block and the first filtering boundary coincide on an edge of the polyhedron with the M faces.

In execution of the foregoing operations, when filtering the first to-be-filtered block in the two-dimensional planar image obtained by splicing the M pixel areas formed by mapping the pixels of the spherical panorama image to the polyhedron with the M faces, the terminal performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

In an optional solution, after determining that a first filtering boundary of a first to-be-filtered block in a target image belongs to a boundary of a pixel area in the target image, before filtering the first filtering boundary based on a pixel in the first to-be-filtered block and a pixel in a filtering reference block in the target image, the processor 1201 is further configured to determine the filtering reference block of the first to-be-filtered block in the target image based on preconfigured layout information, where the layout information indicates a connection relationship of the M pixel areas in the polyhedron with the M faces.

In another optional solution, the determining, by the processor 1201, that a first filtering boundary of a first to-be-filtered block in a target image belongs to a boundary of a pixel area in the target image is specifically: determining, based on prestored coordinates of a point on the boundary of the pixel area in the target image and prestored coordinates of a point on the first filtering boundary of the first to-be-filtered block, that the first filtering boundary belongs to the boundary of the pixel area.

In another optional solution, the filtering, by the processor 1201, the first filtering boundary based on a pixel in the first to-be-filtered block and a pixel in a filtering reference block in the target image is specifically: filtering the first filtering boundary based on pixels on two sides of the first filtering boundary on the polyhedron with the M faces.

In another optional solution, the processor 1201 is further configured to: determine that a second filtering boundary of a second to-be-filtered block does not belong to the boundary of the pixel area in the target image; and filter the second filtering boundary based on pixels on two sides of the second filtering boundary in the target image.

In another optional solution, after filtering the first filtering boundary based on the pixel in the first to-be-filtered block and the pixel in the filtering reference block in the target image, the processor 1201 is further configured to: generate a reference identifier, where the reference identifier is used to instruct to no longer filter, when the filtering reference block is traversed to in a filtering process, a boundary that is of the filtering reference block and that is close to the first to-be-filtered block.

It should be noted that for specific implementation of each operation, correspondingly refer to the corresponding descriptions in the method embodiment shown in FIG. 6.

When filtering the first to-be-filtered block in the two-dimensional planar image obtained by splicing the M pixel areas formed by mapping the pixels of the spherical panorama image to the polyhedron with the M faces, the terminal 120 shown in FIG. 12 performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

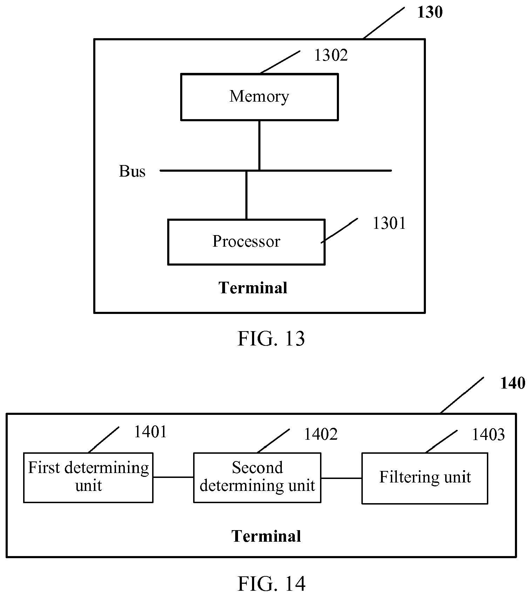

FIG. 13 shows another terminal 130 according to an embodiment of the present invention. The terminal 130 includes a processor 1301 and a memory 1302, and the processor 1301 and the memory 1302 are connected to each other by using a bus.

The memory 1302 includes but is not limited to a random access memory (RAM), a read-only memory (ROM), an erasable programmable read-only memory (EPROM or flash memory), or a portable read-only memory (CD-ROM), and the memory 1302 is used for a related instruction and data.

The processor 1301 may be one or more central processing units (English: Central Processing Unit, CPU for short). When the processor 1301 is a CPU, the CPU may be a single-core CPU or may be a multi-core CPU.

The processor 1301 of the terminal 130 is configured to read program code stored in the memory 1302, to perform the following operations:

determining that a first filtering boundary of a first to-be-filtered block in a target image belongs to a boundary of a pixel area in the target image, where the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, points on the polyhedron with the M faces are used to constitute the pixel area including pixels, and M is greater than or equal to 4; and

filtering the first filtering boundary by using a plurality of target pixels in the first to-be-filtered block and a plurality of reference pixels, where the first to-be-filtered block is within a first pixel area and the reference pixel is within a second pixel area, the first pixel area and the second pixel area are connected to each other on the polyhedron with the M faces, a plurality of intersecting points of an extended line of a line connecting the spherical center and the plurality of reference pixels and a plane in which a pixel area to which the first to-be-filtered block belongs is located are symmetrical to the plurality of target pixels by using the first filtering boundary as an axis of symmetry, and in the polyhedron with the M faces, the first filtering boundary is on an edge connecting the first pixel area to the second pixel area.

In execution of the foregoing operations, when filtering the first to-be-filtered block in the two-dimensional planar image obtained by splicing the M pixel areas formed by mapping the pixels of the spherical panorama image to the polyhedron with the M faces, the terminal performs filtering by using pixel values of pixels in a pixel area on another side of a pixel boundary in which the first filtering boundary of the first to-be-filtered block is located. Lines connecting the pixels and pixels to be used in the first to-be-filtered block in the panorama image basically constitute smooth arc lines. Therefore, deformation between content of the first to-be-filtered block and content in the pixel area on the another side is relatively small, and a de-blocking filtering effect is desirable.

In an optional solution, the processor 1301 is further configured to: determine that a second filtering boundary of a second to-be-filtered block does not belong to the boundary of the pixel area in the target image; and filter the second filtering boundary based on pixels on two sides of the second filtering boundary in the target image.

In another optional solution, boundary filtering strength BS with reference to which the first filtering boundary is filtered is calculated based on encoding information of the first to-be-filtered block and encoding information of the filtering reference block, and a boundary of the filtering reference block and the first filtering boundary coincide on an edge of the polyhedron with the M faces.

In another optional solution, pixel values used in a filtering decision with reference to which the first filtering boundary is filtered are pixel values of the plurality of target pixels and pixel values of the plurality of reference pixels, encoding information used in the filtering policy is the encoding information of the first to-be-filtered block and the encoding information of the filtering reference block, and a boundary of the filtering reference block and the first filtering boundary coincide on an edge of the polyhedron with the M faces.

In another optional solution, the encoding information includes at least one of a quantization parameter, an encoding mode, a quantization residual coefficient, and a motion parameter.

In another optional solution, the plurality of reference pixels include at least one special pixel, and a pixel value of the special pixel is calculated through interpolation by using a pixel value of a pixel around the special pixel.

It should be noted that for specific implementation of each operation, correspondingly refer to the corresponding descriptions in the method embodiment shown in FIG. 8.

When filtering the first to-be-filtered block in the two-dimensional planar image obtained by splicing the M pixel areas formed by mapping the pixels of the spherical panorama image to the polyhedron with the M faces, the terminal 130 shown in FIG. 13 performs filtering by using pixel values of pixels in a pixel area on another side of a pixel boundary in which the first filtering boundary of the first to-be-filtered block is located. Lines connecting the pixels and pixels to be used in the first to-be-filtered block in the panorama image basically constitute smooth arc lines. Therefore, deformation between content of the first to-be-filtered block and content in the pixel area on the another side is relatively small, and a de-blocking filtering effect is desirable.

FIG. 14 is a schematic structural diagram of another terminal 140 according to an embodiment of the present invention. The terminal 140 may include a first determining unit 1401, a second determining unit 1402, and a filtering unit 1403. Detailed descriptions of each unit are as follows.

The first determining unit 1401 is configured to determine that a filtering boundary of a to-be-filtered block in a target image belongs to a boundary of any planar image, where the target image is a planar image obtained by splicing the planar images of a polyhedron with M faces, the planar image is a projected planar image of a panorama image in a direction, and M is greater than or equal to 4. The second determining unit 1402 is configured to determine a filtering reference block of the to-be-filtered block in the target image. The filtering unit 1403 is configured to filter the filtering boundary based on the to-be-filtered block and the filtering reference block.

In execution of the foregoing units, when filtering the to-be-filtered block in the two-dimensional planar image obtained by splicing the M planar images formed by mapping the pixels of the spherical panorama image to the polyhedron with the M faces, the terminal performs filtering not by using a pixel value of a pixel in a block bordering the to-be-filtered block in the filtering boundary in the two-dimensional plane, and instead performs filtering by using the pixel value of the pixel in the filtering reference block bordering the to-be-filtered block in the filtering boundary on the polyhedron. Because the pixel value in the filtering reference block and the pixel value in the to-be-filtered block are obtained by mapping pixel values of neighboring parts in the panorama image, content in the filtering reference block and the to-be-filtered block is desirably continuous and a de-blocking filtering effect is desirable.

In an optional solution, the first determining unit 1401 is specifically configured to determine, based on coordinates that are of the filtering boundary and that are in the target image and pre-determined coordinates that are of a pixel of the boundary in the planar image on the polyhedron with the M faces and that are in the target image, that the filtering boundary belongs to the boundary of the planar image.

In another optional solution, the second determining unit 1402 is specifically configured to determine, based on a pixel value of each pixel in a first pixel set of the to-be-filtered block and a pixel value of each pixel in a second pixel set of the filtering reference block, a filtering policy used for the filtering, where each of the first pixel set and the second pixel set is neighboring to the filtering boundary.

In another optional solution, the second determining unit 1402 is specifically configured to determine, based on encoding information of the to-be-filtered block and encoding information of the filtering reference block, filtering strength used for the filtering.

In another optional solution, the encoding information includes at least one of a quantization parameter, an encoding mode, a quantization residual coefficient, and a motion parameter.

In another optional solution, the determining, by the second determining unit, a filtering reference block of the to-be-filtered block in the target image is specifically: determining a first adjacent block of the to-be-filtered block on the polyhedron with the M faces, where a border of the first adjacent block and the to-be-filtered block coincides with the filtering boundary; determining a location of the first adjacent block in the target image based on preconfigured layout information, where the layout information represents a splicing relationship between the planar images of the polyhedron with the M faces in the target image, and the splicing relationship includes at least one of an arrangement sequence and a rotation angle in splicing the planar images of the polyhedron with the M faces in the target image; and determining that the first adjacent block in the location is the filtering reference block.

In another optional solution, the second determining unit 1402 is specifically configured to determine a second adjacent block of the to-be-filtered block in the target image as the filtering reference block, where a border of the second adjacent block and the to-be-filtered block coincides with the filtering boundary.

In another optional solution, the terminal 140 further includes: a third determining unit, configured to determine a corrected pixel value of a pixel in the filtering reference block; and correspondingly, the determining, by the second determining unit based on a pixel value of each pixel in a first pixel set of the to-be-filtered block and a pixel value of each pixel in a second pixel set of the filtering reference block, a filtering policy used for the filtering is specifically: determining, based on a pixel value of the first pixel set of the to-be-filtered block and a corrected pixel value of the second pixel set of the filtering reference block, the filtering policy used for the filtering.

In another optional solution, the third determining unit is specifically configured to determine a pixel value of a corresponding point of the pixel in the filtering reference block as the corrected pixel value, where on the polyhedron with the M faces, the corresponding point is an intersecting point between a line connecting the pixel in the filtering reference block and the center of the polyhedron with the M faces and a planar image of the polyhedron with the M faces, and the pixel of the filtering reference block and the intersecting point are not in a same planar image.

In another optional solution, the terminal further includes: a calculation unit, configured to: when the intersecting point does not coincide with all integer pixels in the planar image, calculate a pixel value of the intersecting point through interpolation by using a pixel around the intersecting point in the planar image; and an obtaining unit, configured to use the pixel value obtained through interpolation as a pixel value of the corresponding point.

In another optional solution, when it is determined that a filtering boundary of a to-be-filtered block in a target image does not belong to a boundary of any planar image, the filtering unit is configured to: filter the filtering boundary based on pixels on two sides of the filtering boundary in the target image.

In another optional solution, the terminal further includes: a generation unit, configured to: after the filtering unit filters the filtering boundary based on a pixel of the to-be-filtered block and a pixel of the filtering reference block, generate an identifier, where the identifier is used to represent that filtering on the filtering boundary of the to-be-filtered block is completed.

It should be noted that for specific implementation of each operation, correspondingly refer to the corresponding descriptions in the method embodiment shown in FIG. 9.

When filtering the to-be-filtered block in the two-dimensional planar image obtained by splicing the M planar images formed by mapping the pixels of the spherical panorama image to the polyhedron with the M faces, the terminal 140 shown in FIG. 14 performs filtering not by using a pixel value of a pixel in a block bordering the to-be-filtered block in the filtering boundary in the two-dimensional plane, and instead performs filtering by using the pixel value of the pixel in the filtering reference block bordering the to-be-filtered block in the filtering boundary on the polyhedron. Because the pixel value in the filtering reference block and the pixel value in the to-be-filtered block are obtained by mapping pixel values of neighboring parts in the panorama image, content in the filtering reference block and the to-be-filtered block is desirably continuous and a de-blocking filtering effect is desirable.

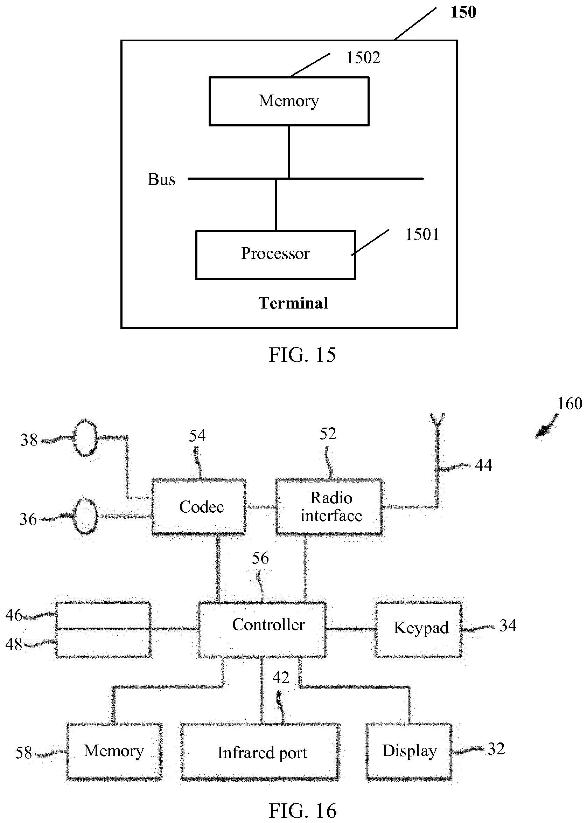

FIG. 15 shows another terminal 150 according to an embodiment of the present invention. The terminal 150 includes a processor 1501 and a memory 1502, and the processor 1501 and the memory 1502 are connected to each other by using a bus.

The memory 1502 includes but is not limited to a random access memory (RAM), a read-only memory (ROM), an erasable programmable read-only memory (EPROM or flash memory), or a portable read-only memory (CD-ROM), and the memory 1502 is used for a related instruction and data.

The processor 1501 may be one or more central processing units (English: Central Processing Unit, CPU for short). When the processor 1501 is a CPU, the CPU may be a single-core CPU or may be a multi-core CPU.

The processor 1501 of the terminal 150 is configured to read program code stored in the memory 1502, to perform the following operations:

determining that a filtering boundary of a to-be-filtered block in a target image belongs to a boundary of any planar image, where the target image is a planar image obtained by splicing the planar images of a polyhedron with M faces, the planar image is a projected planar image of a panorama image in a direction, and M is greater than or equal to 4; determining a filtering reference block of the to-be-filtered block in the target image; and filtering the filtering boundary based on the to-be-filtered block and the filtering reference block.

In execution of the foregoing operations, when filtering the to-be-filtered block in the two-dimensional planar image obtained by splicing the M planar images formed by mapping the pixels of the spherical panorama image to the polyhedron with the M faces, the terminal performs filtering not by using a pixel value of a pixel in a block bordering the to-be-filtered block in the filtering boundary in the two-dimensional plane, and instead performs filtering by using the pixel value of the pixel in the filtering reference block bordering the to-be-filtered block in the filtering boundary on the polyhedron. Because the pixel value in the filtering reference block and the pixel value in the to-be-filtered block are obtained by mapping pixel values of neighboring parts in the panorama image, content in the filtering reference block and the to-be-filtered block is desirably continuous and a de-blocking filtering effect is desirable.

In an optional solution, the determining, by the processor 1501, that a filtering boundary of a to-be-filtered block in a target image belongs to a boundary of any planar image is specifically: determining, based on coordinates that are of the filtering boundary and that are in the target image and pre-determined coordinates that are of a pixel of the boundary in the planar image on the polyhedron with the M faces and that are in the target image, that the filtering boundary belongs to the boundary of the planar image.

In another optional solution, the filtering, by the processor 1501, the filtering boundary based on the to-be-filtered block and the filtering reference block is specifically: determining, based on a pixel value of each pixel in a first pixel set of the to-be-filtered block and a pixel value of each pixel in a second pixel set of the filtering reference block, a filtering policy used for the filtering, where each of the first pixel set and the second pixel set is neighboring to the filtering boundary.

In another optional solution, the filtering, by the processor 1501, the filtering boundary based on the to-be-filtered block and the filtering reference block is specifically: determining, based on encoding information of the to-be-filtered block and encoding information of the filtering reference block, filtering strength used for the filtering.

In another optional solution, the encoding information includes at least one of a quantization parameter, an encoding mode, a quantization residual coefficient, and a motion parameter.

In another optional solution, the determining, by the processor 1501, a filtering reference block of the to-be-filtered block in the target image is specifically: determining a first adjacent block of the to-be-filtered block on the polyhedron with the M faces, where a border of the first adjacent block and the to-be-filtered block coincides with the filtering boundary; determining a location of the first adjacent block in the target image based on preconfigured layout information, where the layout information represents a splicing relationship between the planar images of the polyhedron with the M faces in the target image, and the splicing relationship includes at least one of an arrangement sequence and a rotation angle in splicing the planar images of the polyhedron with the M faces in the target image; and determining that the first adjacent block in the location is the filtering reference block.

In another optional solution, the determining, by the processor 1501, a filtering reference block of the to-be-filtered block in the target image is specifically: determining a second adjacent block of the to-be-filtered block in the target image as the filtering reference block, where a border of the second adjacent block and the to-be-filtered block coincides with the filtering boundary.

In another optional solution, after the determining a second adjacent block as the filtering reference block, the processor 1501 is further configured to determine a corrected pixel value of a pixel in the filtering reference block; and correspondingly, the determining, based on a pixel value of each pixel in a first pixel set of the to-be-filtered block and a pixel value of each pixel in a second pixel set of the filtering reference block, a filtering policy used for the filtering includes: determining, based on a pixel value of the first pixel set of the to-be-filtered block and a corrected pixel value of the second pixel set of the filtering reference block, the filtering policy used for the filtering.

In another optional solution, the determining, by the processor 1501, a corrected pixel value of a pixel in the filtering reference block is specifically: determining a pixel value of a corresponding point of the pixel in the filtering reference block as the corrected pixel value, where on the polyhedron with the M faces, the corresponding point is an intersecting point between a line connecting the pixel in the filtering reference block and the center of the polyhedron with the M faces and a planar image of the polyhedron with the M faces, and the pixel of the filtering reference block and the intersecting point are not in a same planar image.

In another optional solution, when the intersecting point does not coincide with all integer pixels in the planar image, the processor 1501 is further configured to: calculate a pixel value of the intersecting point through interpolation by using a pixel around the intersecting point in the planar image; and use the pixel value obtained through interpolation as a pixel value of the corresponding point.

In an optional solution, when determining that a filtering boundary of a to-be-filtered block in a target image does not belong to a boundary of any planar image, the processor 1501 is further configured to: filter the filtering boundary based on pixels on two sides of the filtering boundary in the target image.

In another optional solution, after filtering the filtering boundary based on a pixel of the to-be-filtered block and a pixel of the filtering reference block, the processor 1501 is further configured to generate an identifier, where the identifier is used to represent that filtering on the filtering boundary of the to-be-filtered block is completed.

It should be noted that for specific implementation of each operation, correspondingly refer to the corresponding descriptions in the method embodiment shown in FIG. 9.

When filtering the to-be-filtered block in the two-dimensional planar image obtained by splicing the M planar images formed by mapping the pixels of the spherical panorama image to the polyhedron with the M faces, the terminal 150 shown in FIG. 15 performs filtering not by using a pixel value of a pixel in a block bordering the to-be-filtered block in the filtering boundary in the two-dimensional plane, and instead performs filtering by using the pixel value of the pixel in the filtering reference block bordering the to-be-filtered block in the filtering boundary on the polyhedron. Because the pixel value in the filtering reference block and the pixel value in the to-be-filtered block are obtained by mapping pixel values of neighboring parts in the panorama image, content in the filtering reference block and the to-be-filtered block is desirably continuous and a de-blocking filtering effect is desirable.

The following provides additional descriptions of the structure of the terminal in this embodiment of the present invention.

FIG. 16 is a schematic block diagram of a video encoding and decoding apparatus or a terminal 160. The apparatus or the terminal 160 may be the terminal 100, the terminal 110, the terminal 120, the terminal 130, the terminal 140, the terminal 150, or the like.

The terminal 50 may be, for example, a mobile terminal or user equipment in a wireless communications system. It should be understood that this embodiment of the present invention may be implemented in any terminal or apparatus that may need to encode and decode, or encode, or decode a video image.

The apparatus 160 may include a housing 90 configured to accommodate and protect a device. The apparatus 160 may further include a display 32 in a form of a liquid crystal display. In another embodiment of the present invention, the display may be any proper display technology suitable for displaying an image or a video. The apparatus 160 may further include a keypad 34. In another embodiment of the present invention, any proper data or user interface mechanism may be applied. For example, a user interface may be implemented as a virtual keyboard or a data recording system to serve as a part of a touch sensitive display. The apparatus may include a microphone 36 or any proper audio input, and the audio input may be digital or analog signal input. The apparatus 160 may further include the following audio output device, and the audio output device may be any one of the following items in this embodiment of the present invention: a headset 38, a speaker, or an analog audio or digital audio output connection. The apparatus 160 may also include a battery 40. In another embodiment of the present invention, the device may be powered by any proper mobile energy device, for example, a solar power battery, a fuel battery, or a clock mechanism generator. The apparatus may further include an infrared port 42 configured to perform short-distance line-of-sight communication with another device. In another embodiment, the apparatus 160 may further include any proper solution for short-distance communication, for example, a Bluetooth wireless connection or a USB/live line wired connection.

The apparatus 160 may include a controller 56 or a processor configured to control the apparatus 160. The controller 56 may be connected to the memory 58. In this embodiment of the present invention, the memory may store data in a form of an image and audio data, and/or may store an instruction for execution on the controller 56. The controller 56 may be further connected to an encoder and decoder circuit 54 suitable for encoding and decoding audio and/or video data or assisting encoding and decoding implemented by the controller 56.

The apparatus 160 may further include a card reader 48 and a smart card 46, for example, a UICC and a UICC reader, that are configured to provide user information and that are suitable for providing authentication information for network authentication and user authorization.

The apparatus 160 may further include a radio interface circuit 52. The radio interface circuit is connected to a controller and is suitable for generating, for example, a wireless communication signal used to communicate with a cellular communication network, a wireless communications system, or a wireless local area network. The apparatus 160 may further include an antenna 44. The antenna is connected to the radio interface circuit 52, and is configured to: send a radio frequency signal generated by the radio interface circuit 52 to another (a plurality of) apparatus and receive a radio frequency signal from another (a plurality of) apparatus.

In some embodiments of the present invention, the apparatus 160 includes a camera that can record or detect single frames. A codec 54 or a controller receives and processes the single frames. In some embodiments of the present invention, the apparatus may receive to-be-processed video image data from another device before transmission and/or storage. In some embodiments of the present invention, the apparatus 160 may receive, through a wireless or wired connection, an image for coding/decoding.

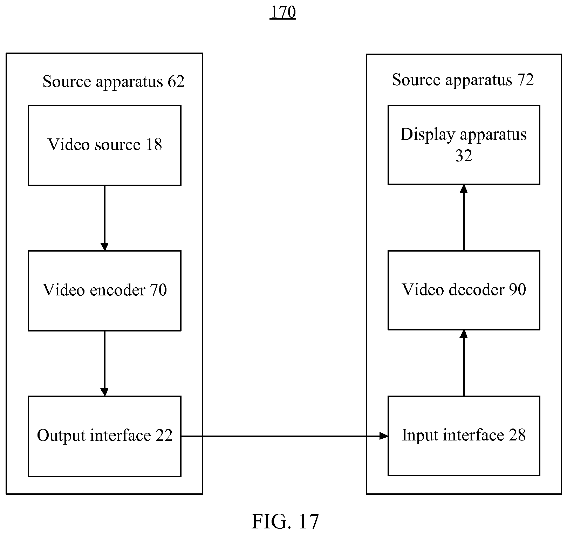

FIG. 17 is a schematic block diagram of another video encoding and decoding system 170 according to an embodiment of the present invention. As shown in FIG. 17, the video encoding and decoding system 170 includes a source apparatus 62 and a destination apparatus 72. The source apparatus 62 generates encoded video data. Therefore, the source apparatus 62 may be referred to as a video encoding apparatus or a video encoding device. The destination apparatus 72 may decode the encoded video data generated by the source apparatus 62. Therefore, the destination apparatus 72 may be referred to as a video decoding apparatus or a video decoding device. The source apparatus 62 and the destination apparatus 72 may be examples of a video encoding and decoding apparatus or a video encoding and decoding device. The source apparatus 62 and the destination apparatus 72 may include widespread apparatus, including a desktop computer, a mobile computing apparatus, a notebook (for example, laptop) computer, a tablet computer, a set-top box, a handset such as a smartphone, a television, a camera, a display apparatus, a digital media player, a video game console, a vehicle-mounted computer, or other similar apparatuses. The terminal in the embodiments of the present invention may be the source apparatus 62 or may be the destination apparatus 72.

The destination apparatus 72 may receive, by using a channel 16, the encoded video data from the source apparatus 62. The channel 16 may include one or more media and/or apparatuses that can move the encoded video data from the source apparatus 62 to the destination apparatus 72. In an example, the channel 16 may include one or more communication media that enable the source apparatus 62 to directly transmit encoded video data to the destination apparatus 72 in real time. In the example, the source apparatus 62 may modulate the encoded video data according to a communications standard (for example, a wireless communication protocol), and may transmit modulated video data to the destination apparatus 72. The one or more communication media may include wireless and/or wired communication media, for example, a radio frequency (RF) spectrum or one or more physical transmission lines. The one or more communication media may constitute a part of a packet-based network (for example, a local area network, a wide area network, or a global network (such as the Internet)). The one or more communication media may include a router, a switch, a base station, or another device that facilitates communication from the source apparatus 62 to the destination apparatus 72.

In another example, the channel 16 may include a storage medium storing the encoded video data generated by the source apparatus 62. In the example, the destination apparatus 72 may access the storage medium by means of disk access or card access. The storage medium may include multiple types of local access-type data storage media such as Blu-ray, a DVD, a CD-ROM, or a flash memory, or another suitable digital storage medium configured to store the encoded video data.

In another example, the channel 16 may include a file server or another intermediate storage apparatus storing the encoded video data generated by the source apparatus 62. In the example, the destination apparatus 72 may access, by means of streaming transmission or downloading, the encoded video data stored in the file server or the another intermediate storage apparatus. The file server may be of a server type that can store the encoded video data and transmit the encoded video data to the destination apparatus 72. An example of the file server includes a web server (for example, used for a website), a File Transfer Protocol (FTP) server, a network attached storage (NAS) apparatus, and a local disk drive.

The destination apparatus 72 may access the encoded video data by means of a standard data connection (for example, an Internet connection). An example type of data connection may include a wireless channel (for example, a Wi-Fi connection), a wired connection (for example, a DSL or a cable modem), or a combination of both that are suitable for accessing the encoded video data stored on the file server. Transmission of the encoded video data from the file server may be streaming transmission, downloading transmission, or a combination of the streaming transmission and the downloading transmission.

A technology of the present invention is not limited to a wireless application scenario. For example, the technology may be applied to video encoding and decoding supporting multiple multimedia applications such as the following applications: over-the-air television broadcasting, cable television transmission, satellite television transmission, streaming-transmission video transmission (for example, by means of the Internet), encoding of video data stored in a data storage medium, decoding of video data stored in a data storage medium, or another application. In some examples, the video encoding and decoding system 170 may be configured to support unidirectional or bidirectional video transmission, to support applications such as video streaming transmission, video playing, video broadcasting, and/or video telephony.

In the example in FIG. 17, the source apparatus 62 includes a video source 18, a video encoder 70, and an output interface 22. In some examples, the output interface 22 may include a modulator/demodulator (modem) and/or a transmitter. The video source 18 may include a video capturing apparatus (for example, a video camera), a video archive including pre-captured video data, a video input interface configured to receive video data from a video content provider, and/or a computer graphics system configured to generate video data, or a combination of the foregoing video data sources.

The video encoder 70 may encode video data from the video source 18. In some examples, the source apparatus 62 directly transmits encoded video data to the destination apparatus 72 by using the output interface 22. The encoded video data may be further stored in a storage medium or a file server, so that the destination apparatus 72 accesses the encoded video data later for decoding and/or playing.

In the example in FIG. 17, the destination apparatus 72 includes an input interface 28, a video decoder 90, and a display apparatus 32. In some examples, the input interface 28 includes a receiver and/or a modem. The input interface 28 may receive the encoded video data by using the channel 16. The display apparatus 32 may be integrated with the destination apparatus 72 or may be outside the destination apparatus 72. Usually, the display apparatus 32 displays decoded video data. The display apparatus 32 may include multiple types of display apparatus such as a liquid crystal display (LCD), a plasma display, an organic light-emitting diode (OLED) display, or a display apparatus of another type.

The video encoder 70 and the video decoder 90 may perform operations according to a video compression standard (for example, a high efficiency video coding H.265 standard), and may comply with an HEVC test model (HM).

Alternatively, the video encoder 70 and the video decoder 90 may perform operations according to another dedicated or industrial standard. The standard includes ITU-TH.261, ISO/IEC MPEG-1 Visual, ITU-T H.262 or ISO/IEC MPEG-2 Visual, ITU-T H.263, ISO/IEC MPEG-4 Visual, or ITU-T H.264 (which is also referred to as ISO/IEC MPEG-4 AVC), and includes scalable video coding (SVC) extension and multiview video coding (MVC) extension. It should be understood that the technology in the present invention is not limited to any particular encoding and decoding standard or technology.

In addition, FIG. 17 is merely an example and the technology of the present invention may be applied to a video encoding and decoding application that does not necessarily include any data communication between an encoding apparatus and a decoding apparatus (for example, one-sided video encoding or video decoding). In another example, a local memory is searched for data, the data is transmitted by means of streaming transmission in a network, or the data is operated in a similar manner. The encoding apparatus may encode the data and store encoded data in the memory, and/or the decoding apparatus may retrieve data from the memory and decode the data. Generally, a plurality of apparatuses that do not communicate with each other and that only encode data to a memory and/or retrieve data from a memory and decode the data are used to perform encoding and decoding.

The video encoder 70 and the video decoder 90 may be separately implemented as any possible implementation, for example, one or more microprocessors, a digital signal processor (DSP), an application-specific integrated circuit (ASIC), a field programmable gate array (FPGA), discrete logic, hardware, or any combination thereof, in multiple suitable circuits. If the technology is partially or entirely implemented by using software, the apparatus may store an instruction of the software in a suitable non-transitory computer-readable storage medium, and may execute the technology in the present invention by using one or more processors by executing the instruction in the hardware. Any one of the foregoing (including hardware, software, a combination of hardware and software, and the like) may be considered as the one or more processors. Each of the video encoder 70 and the video decoder 90 may be included in one or more encoders or decoders. Either of the video encoder 20 and the video decoder 30 may be integrated as a part of a combined encoder/decoder (codec (CODEC)) in another apparatus.

In the present invention, generally, a video coder 70 may be designated to send information to another apparatus (for example, a video decoder 90) "by using a signal". The term "sending by using a signal" may generally refer to transmission of a syntactic element and/or encoded video data. The convey may happen in real time or approximately in real time. Alternatively, such communication may happen in a time span, for example, may happen when a syntactic element is stored in a computer readable storage medium by using binary data obtained by means of encoding during encoding. After being stored in the medium, the syntactic element may be searched for by the decoding apparatus at any time.

In conclusion, in implementation of the embodiments of the present invention, when filtering the first to-be-filtered block in the two-dimensional planar image obtained by splicing the M pixel areas formed by mapping the pixels of the spherical panorama image to the polyhedron with the M faces, the terminal performs filtering not by using a pixel value of a pixel in a block bordering the first to-be-filtered block in the first filtering boundary in the two-dimensional plane, and instead performs filtering by using the pixel value of the pixel in the filtering reference block bordering the first to-be-filtered block in the first filtering boundary on the polyhedron. Because the pixel value in the filtering reference block and the pixel value in the first to-be-filtered block are obtained by mapping pixel values of neighboring parts in the panorama image, content in the filtering reference block and the first to-be-filtered block is desirably continuous and a de-blocking filtering effect is desirable.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium includes: any medium that can store program code, such as a ROM, a RAM, a magnetic disk, or an optical disc.

**Claims**

1.　A de-blocking filtering method, comprising:

   determining that a first filtering boundary of a first to-be-filtered block in a target image belongs to a boundary of a pixel area in the target image, wherein the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, and points on the polyhedron with the M faces are used to constitute the pixel area comprising pixels, and M is greater than or equal to 4; and
   filtering the first filtering boundary based on a pixel in the first to-be-filtered block and a pixel in a filtering reference block in the target image, wherein a boundary of the filtering reference block and the first filtering boundary coincide on an edge of the polyhedron with the M faces.

2.　The method according to claim 1, wherein after the determining that a first filtering boundary of a first to-be-filtered block in a target image belongs to a boundary of a pixel area in the target image, before the filtering the first filtering boundary based on a pixel in the first to-be-filtered block and a pixel in a filtering reference block in the target image, the method further comprises:
   determining the filtering reference block of the first to-be-filtered block in the target image based on preconfigured layout information, wherein the layout information indicates a connection relationship of the M pixel areas in the polyhedron with the M faces.

3.　The method according to claim 1 or 2, wherein the determining that a first filtering boundary of a first to-be-filtered block in a target image belongs to a boundary of a pixel area in the target image comprises:
   determining, based on prestored coordinates of a point on the boundary of the pixel area in the target image and prestored coordinates of a point on the first filtering boundary of the first to-be-filtered block, that the first filtering boundary belongs to the boundary of the pixel area.

4.　The method according to any one of claims 1 to 3, wherein the filtering the first filtering boundary based on a pixel in the first to-be-filtered block and a pixel in a filtering reference block in the target image comprises:
   filtering the first filtering boundary based on pixels on two sides of the first filtering boundary on the polyhedron with the M faces.

5.　The method according to any one of claims 1 to 4, wherein the method further comprises:

   determining that a second filtering boundary of a second to-be-filtered block does not belong to the boundary of the pixel area in the target image; and
   filtering the second filtering boundary based on pixels on two sides of the second filtering boundary in the target image.

6.　The method according to any one of claims 1 to 5, wherein after the filtering the first filtering boundary based on a pixel in the first to-be-filtered block and a pixel in a filtering reference block in the target image, the method further comprises:
   generating a reference identifier, wherein the reference identifier is used to instruct to no longer filter, when the filtering reference block is traversed to in a filtering process, a boundary that is of the filtering reference block and that is close to the first to-be-filtered block.

7.  A de-blocking filtering method, comprising:

    determining that a first filtering boundary of a first to-be-filtered block in a target image belongs to a boundary of a pixel area in the target image, wherein the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, and points on the polyhedron with the M faces are used to constitute the pixel area comprising pixels, and M is greater than or equal to 4; and
    filtering the first filtering boundary by using a plurality of target pixels in the first to-be-filtered block and a plurality of reference pixels, wherein the first to-be-filtered block is within a first pixel area and the reference pixel is within a second pixel area, the first pixel area and the second pixel area are connected to each other on the polyhedron with the M faces, a plurality of intersecting points of an extended line of a line connecting the spherical center and the plurality of reference pixels and a plane in which a pixel area to which the first to-be-filtered block belongs is located are symmetrical to the plurality of target pixels by using the first filtering boundary as an axis of symmetry, and in the polyhedron with the M faces, the first filtering boundary is on an edge connecting the first pixel area to the second pixel area.

8.  The method according to claim 7, wherein the method further comprises:

    determining that a second filtering boundary of a second to-be-filtered block does not belong to the boundary of the pixel area in the target image; and
    filtering the second filtering boundary based on pixels on two sides of the second filtering boundary in the target image.

9.  The method according to claim 7 or 8, wherein boundary filtering strength BS with reference to which the first filtering boundary is filtered is calculated based on encoding information of the first to-be-filtered block and encoding information of the filtering reference block, and a boundary of the filtering reference block and the first filtering boundary coincide on an edge of the polyhedron with the M faces.

10. The method according to any one of claims 7 to 9, wherein pixel values used in a filtering decision with reference to which the first filtering boundary is filtered are pixel values of the plurality of target pixels and pixel values of the plurality of reference pixels, encoding information used in the filtering policy is the encoding information of the first to-be-filtered block and the encoding information of the filtering reference block, and a boundary of the filtering reference block and the first filtering boundary coincide on an edge of the polyhedron with the M faces.

11. The method according to claim 9 or 10, wherein the encoding information comprises at least one of a quantization parameter, an encoding mode, a quantization residual coefficient, and a motion parameter.

12. The method according to any one of claims 7 to 11, wherein the plurality of reference pixels comprise at least one special pixel, and a pixel value of the special pixel is calculated through interpolation by using a pixel value of a pixel around the special pixel.

13. A terminal, comprising:

    a first determining unit, configured to determine that a first filtering boundary of a first to-be-filtered block in a target image belongs to a boundary of a pixel area in the target image, wherein the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, and points on the polyhedron with the M faces are used to constitute the pixel area comprising pixels, and M is greater than or equal to 4; and
    a filtering unit, configured to filter the first filtering boundary based on a pixel in the first to-be-filtered block and a pixel in a filtering reference block in the target image, wherein a boundary of the filtering reference block and the first filtering boundary coincide on an edge of the polyhedron with the M faces.

**14.** The terminal according to claim 13, further comprising:
a second determining unit, configured to: after the first determining unit determines that a first filtering boundary of a first to-be-filtered block in a target image belongs to a boundary of a pixel area in the target image, before the filtering unit filters the first filtering boundary based on a pixel in the first to-be-filtered block and a pixel in a filtering reference block in the target image, determine the filtering reference block of the first to-be-filtered block in the target image based on preconfigured layout information, wherein the layout information indicates a connection relationship of the M pixel areas in the polyhedron with the M faces.

**15.** The terminal according to claim 13 or 14, wherein the first determining unit is specifically configured to determine, based on prestored coordinates of a point on the boundary of the pixel area in the target image and prestored coordinates of a point on the first filtering boundary of the first to-be-filtered block, that the first filtering boundary belongs to the boundary of the pixel area.

**16.** The terminal according to any one of claims 13 to 15, wherein the filtering unit is specifically configured to filter the first filtering boundary based on pixels on two sides of the first filtering boundary on the polyhedron with the M faces.

**17.** The terminal according to any one of claims 13 to 16, wherein
the first determining unit is further configured to determine that a second filtering boundary of a second to-be-filtered block does not belong to the boundary of the pixel area in the target image; and
the filtering unit is further configured to filter the second filtering boundary based on pixels on two sides of the second filtering boundary in the target image.

**18.** The terminal according to any one of claims 13 to 17, further comprising:
a generation unit, configured to: after the filtering unit filters the first filtering boundary based on the pixel in the first to-be-filtered block and the pixel in the filtering reference block in the target image, generate a reference identifier, wherein the reference identifier is used to instruct to no longer filter, when the filtering reference block is traversed to in a filtering process, a boundary that is of the filtering reference block and that is close to the first to-be-filtered block.

**19.** A terminal, comprising:

a first determining unit, configured to determine that a first filtering boundary of a first to-be-filtered block in a target image belongs to a boundary of a pixel area in the target image, wherein the target image is a planar image obtained by splicing M pixel areas, the M pixel areas are M faces of a polyhedron with the M faces that surrounds a spherical panorama image, if a first point, a second point, and a spherical center of the panorama image are on a same line, a pixel value of the first point is equal to that of the second point, the first point is a point on the polyhedron with the M faces, the second point is a point in the panorama image, and points on the polyhedron with the M faces are used to constitute the pixel area comprising pixels, and M is greater than or equal to 4; and
a filtering unit, configured to filter the first filtering boundary by using a plurality of target pixels in the first to-be-filtered block and a plurality of reference pixels, wherein the first to-be-filtered block is within a first pixel area and the reference pixel is within a second pixel area, the first pixel area and the second pixel area are connected to each other on the polyhedron with the M faces, a plurality of intersecting points of an extended line of a line connecting the spherical center and the plurality of reference pixels and a plane in which a pixel area to which the first to-be-filtered block belongs is located are symmetrical to the plurality of target pixels by using the first filtering boundary as an axis of symmetry, and in the polyhedron with the M faces, the first filtering boundary is on an edge connecting the first pixel area to the second pixel area.

**20.** The terminal according to claim 19, wherein
the first determining unit is further configured to determine that a second filtering boundary of a second to-be-filtered block does not belong to the boundary of the pixel area in the target image; and
the filtering unit is further configured to filter the second filtering boundary based on pixels on two sides of the second filtering boundary in the target image.

**21.** The terminal according to claim 19 or 20, wherein boundary filtering strength BS with reference to which the first filtering boundary is filtered is calculated based on encoding information of the first to-be-filtered block and encoding information of the filtering reference block, and a boundary of the filtering reference block and the first filtering boundary coincide on an edge of the polyhedron with the M faces.

22. The terminal according to any one of claims 19 to 21, wherein pixel values used in a filtering decision with reference to which the first filtering boundary is filtered are pixel values of the plurality of target pixels and pixel values of the plurality of reference pixels, encoding information used in the filtering policy is the encoding information of the first to-be-filtered block and the encoding information of the filtering reference block, and a boundary of the filtering reference block and the first filtering boundary coincide on an edge of the polyhedron with the M faces.

23. The terminal according to claim 21 or 22, wherein the encoding information comprises at least one of a quantization parameter, an encoding mode, a quantization residual coefficient, and a motion parameter.

24. The terminal according to any one of claims 19 to 23, wherein the plurality of reference pixels comprise at least one special pixel, and a pixel value of the special pixel is calculated through interpolation by using a pixel value of a pixel around the special pixel.

25. A de-blocking filtering method, comprising:

determining that a filtering boundary of a to-be-filtered block in a target image belongs to a boundary of any planar image, wherein the target image is a planar image obtained by splicing the planar images of a polyhedron with M faces, the planar image is a projected planar image of a panorama image in a direction, and M is greater than or equal to 4; and
determining a filtering reference block of the to-be-filtered block in the target image; and
filtering the filtering boundary based on the to-be-filtered block and the filtering reference block.

26. The method according to claim 25, wherein the determining that a filtering boundary of a to-be-filtered block in a target image belongs to a boundary of any planar image comprises:
determining, based on coordinates that are of the filtering boundary and that are in the target image and pre-determined coordinates that are of a pixel of the boundary in the planar image on the polyhedron with the M faces and that are in the target image, that the filtering boundary belongs to the boundary of the planar image.

27. The method according to claim 25 or 26, wherein the filtering the filtering boundary based on the to-be-filtered block and the filtering reference block comprises:
determining, based on a pixel value of each pixel in a first pixel set of the to-be-filtered block and a pixel value of each pixel in a second pixel set of the filtering reference block, a filtering policy used for the filtering, wherein each of the first pixel set and the second pixel set is neighboring to the filtering boundary.

28. The method according to any one of claims 25 to 27, wherein the filtering the filtering boundary based on the to-be-filtered block and the filtering reference block comprises:
determining, based on encoding information of the to-be-filtered block and encoding information of the filtering reference block, filtering strength used for the filtering.

29. The method according to claim 28, wherein the encoding information comprises at least one of a quantization parameter, an encoding mode, a quantization residual coefficient, and a motion parameter.

30. The method according to any one of claims 25 to 29, wherein the determining a filtering reference block of the to-be-filtered block in the target image comprises:

determining a first adjacent block of the to-be-filtered block on the polyhedron with the M faces, wherein a border of the first adjacent block and the to-be-filtered block coincides with the filtering boundary;
determining a location of the first adjacent block in the target image based on preconfigured layout information, wherein the layout information represents a splicing relationship between the planar images of the polyhedron with the M faces in the target image, and the splicing relationship comprises at least one of an arrangement sequence and a rotation angle in splicing the planar images of the polyhedron with the M faces in the target image; and
determining that the first adjacent block in the location is the filtering reference block.

31. The method according to any one of claims 25 to 29, wherein the determining a filtering reference block of the to-be-filtered block in the target image comprises:

determining a second adjacent block of the to-be-filtered block in the target image as the filtering reference block, wherein a border of the second adjacent block and the to-be-filtered block coincides with the filtering boundary;

32. The method according to claim 31, after the determining a second adjacent block as the filtering reference block, further comprising:

   determining a corrected pixel value of a pixel in the filtering reference block; and
   correspondingly, the determining, based on a pixel value of each pixel in a first pixel set of the to-be-filtered block and a pixel value of each pixel in a second pixel set of the filtering reference block, a filtering policy used for the filtering comprises:
   determining, based on a pixel value of the first pixel set of the to-be-filtered block and a corrected pixel value of the second pixel set of the filtering reference block, the filtering policy used for the filtering.

33. The method according to claim 32, wherein the determining a corrected pixel value of a pixel in the filtering reference block comprises:
   determining a pixel value of a corresponding point of the pixel in the filtering reference block as the corrected pixel value, wherein on the polyhedron with the M faces, the corresponding point is an intersecting point between a line connecting the pixel in the filtering reference block and the center of the polyhedron with the M faces and a planar image of the polyhedron with the M faces, and the pixel of the filtering reference block and the intersecting point are not in a same planar image.

34. The method according to claim 33, when the intersecting point does not coincide with all integer pixels in the planar image, further comprising:

   calculating a pixel value of the intersecting point through interpolation by using a pixel around the intersecting point in the planar image; and
   using the pixel value obtained through interpolation as a pixel value of the corresponding point.

35. The method according to any one of claims 25 to 34, when it is determined that a filtering boundary of a to-be-filtered block in a target image does not belong to a boundary of any planar image, further comprising:
   filtering the filtering boundary based on pixels on two sides of the filtering boundary in the target image.

36. The method according to any one of claims 25 to 35, after the filtering the filtering boundary based on a pixel of the to-be-filtered block and a pixel of the filtering reference block, further comprising:
   generating an identifier, wherein the identifier is used to represent that filtering on the filtering boundary of the to-be-filtered block is completed.

37. A terminal, comprising:

   a first determining unit, configured to determine that a filtering boundary of a to-be-filtered block in a target image belongs to a boundary of any planar image, wherein the target image is a planar image obtained by splicing the planar images of a polyhedron with M faces, the planar image is a projected planar image of a panorama image in a direction, and M is greater than or equal to 4;
   a second determining unit, configured to determine a filtering reference block of the to-be-filtered block in the target image; and
   a filtering unit, configured to filter the filtering boundary based on the to-be-filtered block and the filtering reference block.

38. The terminal according to claim 37, wherein the first determining unit is specifically configured to: determine, based on coordinates that are of the filtering boundary and that are in the target image and pre-determined coordinates that are of a pixel of the boundary in the planar image on the polyhedron with the M faces and that are in the target image, that the filtering boundary belongs to the boundary of the planar image.

39. The terminal according to claim 37 or 38, wherein the second determining unit is specifically configured to: determine, based on a pixel value of each pixel in a first pixel set of the to-be-filtered block and a pixel value of each pixel in a second pixel set of the filtering reference block, a filtering policy used for the filtering, wherein each of the first pixel set and the second pixel set is neighboring to the filtering boundary.

40. The terminal according to any one of claims 37 to 39, wherein the second determining unit is specifically configured to: determine, based on encoding information of the to-be-filtered block and encoding information of the filtering reference block, filtering strength used for the filtering.

41. The terminal according to claim 40, wherein the encoding information comprises at least one of a quantization parameter, an encoding mode, a quantization residual coefficient, and a motion parameter.

42. The terminal according to any one of claims 37 to 41, wherein the determining a filtering reference block of the to-be-filtered block in the target image comprises:

determining a first adjacent block of the to-be-filtered block on the polyhedron with the M faces, wherein a border of the first adjacent block and the to-be-filtered block coincides with the filtering boundary;
determining a location of the first adjacent block in the target image based on preconfigured layout information, wherein the layout information represents a splicing relationship between the planar images of the polyhedron with the M faces in the target image, and the splicing relationship comprises at least one of an arrangement sequence and a rotation angle in splicing the planar images of the polyhedron with the M faces in the target image; and
determining that the first adjacent block in the location is the filtering reference block.

43. The terminal according to any one of claims 37 to 41, wherein the second determining unit is specifically configured to:

determine a second adjacent block of the to-be-filtered block in the target image as the filtering reference block, wherein a border of the second adjacent block and the to-be-filtered block coincides with the filtering boundary.

44. The terminal according to claim 43, wherein the terminal further comprises:

a third determining unit, configured to determine a corrected pixel value of a pixel in the filtering reference block; and
correspondingly, the determining, by the second determining unit based on a pixel value of each pixel in a first pixel set of the to-be-filtered block and a pixel value of each pixel in a second pixel set of the filtering reference block, a filtering policy used for the filtering is specifically:
determining, based on a pixel value of the first pixel set of the to-be-filtered block and a corrected pixel value of the second pixel set of the filtering reference block, the filtering policy used for the filtering.

45. The terminal according to claim 44, wherein the third determining unit is specifically configured to: determine a pixel value of a corresponding point of the pixel in the filtering reference block as the corrected pixel value, wherein on the polyhedron with the M faces, the corresponding point is an intersecting point between a line connecting the pixel in the filtering reference block and the center of the polyhedron with the M faces and a planar image of the polyhedron with the M faces, and the pixel of the filtering reference block and the intersecting point are not in a same planar image.

46. The terminal according to claim 45, wherein the terminal further comprises:

a calculation unit, configured to: when the intersecting point does not coincide with all integer pixels in the planar image, calculate a pixel value of the intersecting point through interpolation by using a pixel around the intersecting point in the planar image; and
an obtaining unit, configured to use the pixel value obtained through interpolation as a pixel value of the corresponding point.

47. The terminal according to any one of claims 37 to 46, wherein when it is determined that a filtering boundary of a to-be-filtered block in a target image does not belong to a boundary of any planar image, the filtering unit is configured to: filter the filtering boundary based on pixels on two sides of the filtering boundary in the target image.

48. The terminal according to any one of claims 37 to 47, further comprising:
a generation unit, configured to: after the filtering unit filters the filtering boundary based on a pixel of the to-be-filtered block and a pixel of the filtering reference block, generate an identifier, wherein the identifier is used to represent that filtering on the filtering boundary of the to-be-filtered block is completed.

FIG. 1

FIG. 2

m

n

r

s

t

u

FIG. 3

| Q | 0 | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|----|----|----|----|----|----|----|----|----|
| $\beta'$ | 0 | 0 | 0 | 0 | 0 | 0 | 0 | 0 | 0 | 0 | 0 | 0 | 0 | 0 | 0 | 0 | 6 | 7 | 8 |
| $t_C'$ | 0 | 0 | 0 | 0 | 0 | 0 | 0 | 0 | 0 | 0 | 0 | 0 | 0 | 0 | 0 | 0 | 0 | 0 | 1 |
| Q | 19 | 20 | 21 | 22 | 23 | 24 | 25 | 26 | 27 | 28 | 29 | 30 | 31 | 32 | 33 | 34 | 35 | 36 | 37 |
| $\beta'$ | 9 | 10 | 11 | 12 | 13 | 14 | 15 | 16 | 17 | 18 | 20 | 22 | 24 | 26 | 28 | 30 | 32 | 34 | 36 |
| $t_C'$ | 1 | 1 | 1 | 1 | 1 | 1 | 1 | 1 | 2 | 2 | 2 | 2 | 3 | 3 | 3 | 3 | 4 | 4 | 4 |
| Q | 38 | 39 | 40 | 41 | 42 | 43 | 44 | 45 | 46 | 47 | 48 | 49 | 50 | 51 | 52 | 53 | | | |
| $\beta'$ | 38 | 40 | 42 | 44 | 46 | 48 | 50 | 52 | 54 | 56 | 58 | 60 | 62 | 64 | - | - | | | |
| $t_C'$ | 5 | 5 | 6 | 6 | 7 | 8 | 9 | 10 | 11 | 13 | 14 | 16 | 18 | 20 | 22 | 24 | | | |

FIG. 4

FIG. 5

S601

A terminal determines that a first filtering boundary of a first to-be-filtered block in a target image belongs to a boundary of a pixel area in the target image

S602

The terminal filters the first filtering boundary based on a pixel in the first to-be-filtered block and a pixel in a filtering reference block in the target image

FIG. 6

| Top | | | |
|---|---|---|---|
| Front $P$ | Rear $Q_1$ | Right $Q$ | Left |
| Bottom | | | |

Two-dimensional plane

Polyhedron

FIG. 7

A terminal determines that a first filtering boundary of a first to-be-filtered block in a target image belongs to a boundary of a pixel area in the target image — S801

The terminal filters the first filtering boundary by using a plurality of target pixels in the first to-be-filtered block and a plurality of reference pixels — S802

FIG. 8

A terminal determines that a filtering boundary of a to-be-filtered block in a target image belongs to a boundary of any planar image — S901

The terminal determines a filtering reference block of the to-be-filtered block in the target image — S902

The terminal filters the filtering boundary based on the to-be-filtered block and the filtering reference block — S903

FIG. 9

**100**

First determining unit 1001 — Filtering unit 1002

Terminal

FIG. 10

**110**

First determining unit 1101 — Filtering unit 1102

Terminal

FIG. 11

**120**

Memory 1202

Bus

Processor 1201

Terminal

FIG. 12

**130**

Memory — 1302

Bus

Processor — 1301

**Terminal**

FIG. 13

**140**

First determining unit — 1401

Second determining unit — 1402

Filtering unit — 1403

**Terminal**

FIG. 14

FIG. 15

FIG. 16

<u>170</u>

FIG. 17

## INTERNATIONAL SEARCH REPORT

| | International application No. |
|---|---|
| | PCT/CN2017/098647 |

### A. CLASSIFICATION OF SUBJECT MATTER

H04N 19/117 (2014.01) i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 球, 全景, 柱面, 三维, 立体, 图片, 视频, 图像, 图象, 影像, 投影, 投射, 映射, 编码, 解码, 滤波, 预测, 参考, 参照, 区, 块, 边缘, 边界, 边沿, spher+, column+, panoram+, imag+, video, project+, map+, +cod+, filter+, referenc+, predict+, area, block?, cylind+, edge, border+

### C. DOCUMENTS CONSIDERED TO BE RELEVANT

| Category* | Citation of document, with indication, where appropriate, of the relevant passages | Relevant to claim No. |
|---|---|---|
| Y | WO 2016064862 A1 (GOOGLE INC.), 28 April 2016 (28.04.2016), description, paragraphs 0233, 0228-0234 and 0269-0275, and figures 21 and 26A | 1-48 |
| Y | CN 105959702 A (BEIJING QIYI CENTURY SCIENCE AND TECHNOLOGY CO., LTD.), 21 September 2016 (21.09.2016), description, paragraph 0003, and figures 1(b) and 1(c) | 1-48 |
| A | CN 106162139 A (WHALEY TECHNOLOGY CO., LTD.), 23 November 2016 (23.11.2016), entire document | 1-48 |
| A | CN 102685532 A (SHANDONG UNIVERSITY), 19 September 2012 (19.09.2012), entire document | 1-48 |
| A | CN 104010180 A (HUAWEI TECHNOLOGIES CO., LTD.), 27 August 2014 (27.08.2014), entire document | 1-48 |
| A | CN 106162207 A (BEIJING BYTE BOUNCE TECHNOLOGY CO., LTD.), 23 November 2016 (23.11.2016), entire document | 1-48 |

☐ Further documents are listed in the continuation of Box C.          ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 October 2017 | 01 November 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>XIE, Jia'ni<br><br>Telephone No. (86-10) 52871165 |

Form PCT/ISA/210 (second sheet) (July 2009)

## INTERNATIONAL SEARCH REPORT
### Information on patent family members

| International application No. |
|---|
| PCT/CN2017/098647 |

| Patent Documents referred in the Report | Publication Date | Patent Family | Publication Date |
|---|---|---|---|
| WO 2016064862 A1 | 28 April 2016 | EP 3210379 A1 | 30 August 2017 |
| | | GB 2545999 A | 05 July 2017 |
| | | CN 106664403 A | 10 May 2017 |
| | | US 2016112713 A1 | 21 April 2016 |
| | | US 2016112705 A1 | 21 April 2016 |
| | | US 2016112704 A1 | 21 April 2016 |
| | | US 2016112489 A1 | 21 April 2016 |
| CN 105959702 A | 21 September 2016 | None | |
| CN 106162139 A | 23 November 2016 | None | |
| CN 102685532 A | 19 September 2012 | CN 102685532 B | 16 April 2014 |
| CN 104010180 A | 27 August 2014 | CN 104010180 B | 25 January 2017 |
| | | WO 2015188666 A1 | 17 December 2015 |
| CN 106162207 A | 23 November 2016 | None | |

Form PCT/ISA/210 (patent family annex) (July 2009)